# EUROPEAN PATENT SPECIFICATION

(11) **EP 1 035 540 B1**
(45) Date of publication and mention of the grant of the patent: **02.07.2008**
(21) Application number: 00104711.7
(22) Date of filing: 03.03.2000
(51) Int. Cl.: G11B 7/24

(54) **Optical information-recording medium and method for recording information**
Medium für optische Datenspeicherung und Verfahren für optische Datenspeicherung
Médium pour l' enrégistrement optique ainsi qu'un procédé d' enregistrement optique

(30) Priority: 05.03.1999 JP 5892499
(43) Date of publication of application: 13.09.2000
(73) Proprietor: FUJIFILM Corporation, Minato-ku Tokyo (JP)
(72) Inventor: Saito, Naoki, Minami Ashigara-shi, Kanagawa (JP); Akiba, Masaharu, Minami Ashigara-shi, Kanagawa (JP); Shibata, Michihiro, Minami Ashigara-shi, Kanagawa (JP)
(74) Representative: Grünecker, Kinkeldey, Stockmair & Schwanhäusser Anwaltssozietät

(56) References cited:
- EP-A- 0 860 820
- EP-A- 0 892 397
- WO-A-98/00762

## Description

### FIELD OF THE INVENTION

The present invention relates to a heat mode type optical information-recording medium capable of recording and replaying information using a laser beam, and to a method for recording information. In particular, the present invention relates to a heat mode type optical information-recording medium such as an optical disk-recordable (CD-R) or a digital video disk-recordable (DVD-R), which is suitable for recording information using a near infrared laser beam or a visible laser beam. Furthermore, the present invention relates to a method for recording information into such a medium.

### BACKGROUND OF THE INVENTION

Optical information-recording media (e.g., optical disks) capable of recording information only once with laser beams have hitherto been known. These optical information-recording media are called CD-recordable (so-called CD-R), and have the typical structure that a transparent disk-shaped substrate is laminated with a recording layer comprising an organic dye, a light-reflective layer comprising a metal such as gold and silver, and a resin protective layer in this order. Information is recorded on this laminated product by irradiating a near infrared laser beam (usually, a laser beam having a wavelength of about 780 nm) to locally deform the recording layer by heat generation. On the other hand, reading (replay) of the information is usually carried out by irradiating a laser beam having the same wavelength as the laser beam for recording to detect the difference in reflectance between a deformed site (recorded area) of the recording layer by heat generation and a non-deformed site (non-recorded area).

With the recent spread of personal computers, optical information-recording media higher in recording density have been desired. For increasing the recording density, it is effective to decrease the diameter of a laser beam irradiated. Further, it has been theoretically known that a laser beam having a shorter wavelength is effective for an increase in density, because the diameter of the laser beam can be decreased. Accordingly, optical disks for carrying out recording and replay using laser beams having wavelengths shorter than 780 nm, which is a wavelength of the laser beam having hitherto been used, have been developed. For example, optical disks called DVD-recordable (so-called DVD-R) have been proposed. This optical disk is produced so as to provide the structure that two disks each comprising a transparent disk-shaped substrate having a diameter of 120 mm on which pregrooves are formed at a track pitch of 0.8 µm which is narrower than 1.6 µm in the CD-R medium.and having provided thereon a recording layer comprising a dye and usually further a light reflective layer and a protective layer on the recording layer, or the disk and a disk-shaped protective substrate having the same shape as said disk, are adhered to each other with an adhesive, facing the recording layer inside. In the DVD-R media, recording and replay are carried out by irradiation of a visible laser beam (usually, a laser beam having a wavelength ranging from 630 nm to 680 nm), and higher density recording than that of the CD-R media is possible.

In the design of the above-mentioned DVD-Rs, the absorption maximum wavelength of dyes used in the dye recording layers is required to be decreased to the wavelength of a laser beam used for recording and replay, because it is shorter than that of the laser beam used in the CD-R media. However, the absorption maximum wavelength of dyes is known to be generally increased as the spread of a n electron system contributing to the optical absorption thereof increases. In particular, for cyanine dyes which have previously been utilized in many optical disks, the longer length of conjugated methine chains results in the longer wavelength. That is to say, for decreasing the absorption maximum wavelength of dyes, it is effective to decrease the length of conjugated methine chains. However, the shorter length of conjugated methine chains results in the lower coefficient of absorption, so that a reduction in recording sensitivity (a reduction in the degree of modulation) is inevitably liable to occur. It is therefore difficult to obtain a performance satisfactory as the dyes for DVD-R merely by shortening the length of conjugated methine chains of the conventional dyes for CD-R media to thereby shift the absorption maximum wavelength to a shorter wavelength.

On the other hand, in the CD-R media, the reflectance at 780 nm is required to be as high as readable with commercial CD players. For increasing the amount of light reflected by the light reflective metal layers provided on the dye recording layers, the optical absorptance due to the dyes is preferably low. It is therefore considered that the absorption maximum wavelength of the dyes is preferably-low. However, the use of dyes having an absorption maximum wavelength on the short wavelength side raises the problem that changes in reflectance between recorded areas and non-recorded areas at 780 nm become small, which causes the difficulty of detecting the difference therebetween. Accordingly, in the conventional CD-R media, dyes having a high reflectance and giving a high recording sensitivity are selectively used. For example, as such dyes, cyanine dyes having benzoindolenine skeletons described in JP-A-64-40382 (the term "JP-A" as used herein means an "unexamined published Japanese patent application") and JP-A-4-175188 can be exemplified.

However, sufficiently satisfactory reflectance and recording sensitivity cannot be obtained at the same time by solely using conventionally used cyanine dyes, hence various investigations have been conducted. One effective means is a method of using an additive in combination, separately with a dye. In particular, a cyanine dye has a cation as a chromophore, and inevitably possesses a counter anion as a constitutional element for maintaining electrical neutrality. Accordingly, as disclosed in JP-A-10-226170, it has been examined to make the counter anion take on the role of the above-described additives to thereby effectually exhibit the effect. However, it has not been able to obtain sufficiently desirable reflectance and recording sensitivity yet, and further improvement has been desired.

Further, an optical disc having a dye recording layer as described above is required to have high resistance against light even after recording as well as to be excellent in recording and replaying properties and to have high reflectance so as to be able to replay with commercially available players. Particularly in recent years, the range of use of CD and DVD is widening and use environments have become by far severer as compared with before (e.g., under fluctuating temperature/humidity conditions) with the increase of use frequency. Durability and light fastness after recording have become more and more important problems under these circumstances.

### SUMMARY OF THE INVENTION

An object of the present invention is to provide a heat mode type optical information-recording medium capable of attaining high reflectance, high recording sensitivity and high fastness.

Another object of the present invention is to provide a heat mode type optical information-recording medium showing high recording sensitivity when information is recorded with laser beams

A still other object of the present invention is to provide a method for recording information using the medium.

Other objects and effects of the present invention will become apparent from the following description.

The present inventors have found that an optical information-recording medium having higher recording sensitivity, higher reflectance and higher fastness can be obtained by the combined use of a specific naphthol derivative with a dye. In particular, larger effects can be obtained by using the naphthol derivative as the counter anion of a cyanine dye compound. That is, the foregoing objects of the present invention have been achieved by providing the following optical information-recording media (1) to (14) and optical information-recording methods (15) and (16).
(1) An optical information-recording medium which comprises a substrate having provided thereon a recording layer capable of recording information by laser beam irradiation, wherein said recording layer contains a naphthol compound represented by formula (I) and a cyanine dye compound: 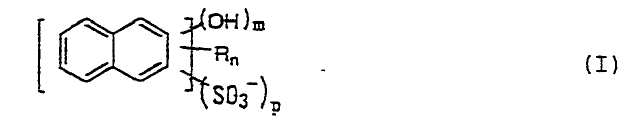 wherein R represents a monovalent substituent other than a hydroxyl group and a SO₃⁻ group; m represents an integer of from 1 to 4; n represents an integer of from 0 to 7; and p represents an integer of from 0 to 7, provided that m + n + p is 8 or less, when n represents an integer of 2 or more, a plurality of R groups may be the same or different, and when m = p = 2, two hydroxyl groups are not substituted at the 1-and 5-positions or at the 1- and 8-positions at the same time.
(2) The optical information-recording medium according to item (1) above, wherein said naphthol compound of formula (I) has neither a hydroxyl group nor a SO₃⁻ group at the 8-position.
(3) The optical information-recording medium according to item (1) or (2) above, wherein m in formula (I) is 1 or 2, and said naphthol compound has a hydroxyl group at least one position selected from 1-, 2- and 7-positions.
(4) The optical infromation-recording medium according to any one of items (1) to (3) above, wherein p in formula (I) is 2 and said naphthol compound has a SO₃⁻ group at the 3- and 6-positions.
(5) The optical information-recording medium according to any one of items (1) to (4) above, wherein said cyanine dye compound is represented by the following formula (II): 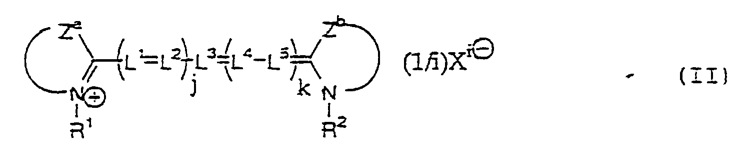 wherein Z^{a} and Z° each represents an atomic group necessary to form a 5- or 6-membered nitrogen-containing heterocyclic ring; R¹ and R² each represents a substituted or unsubstituted alkyl group or a substituted or unsubstituted aryl group; L¹, L², L³, L⁴ and L⁵ each represents a substituted or unsubstituted methine group, and the substituents on L¹ to L⁵ may be bonded to each other to form a ring; j represents 0, 1 or 2; k represents 0 or 1; Xⁱ⁻ represents an i-valent anion; and i represents an integer of 1 or more.
(6) The optical information-recording medium according to any one of items (1) to (5) above, wherein said cyanine dye compound is represented by the following formula (III) : 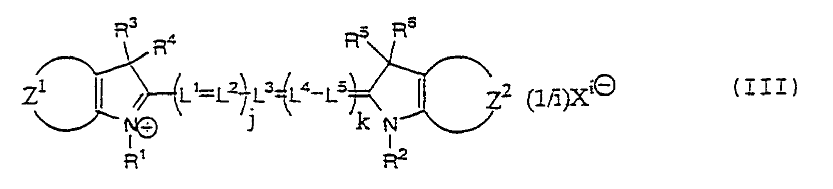 wherein Z¹ and Z² each represents an atomic group necessary to form an indolenine nucleus or a benzoindolenine nucleus; R¹ and R² each represents a substituted or unsubstituted alkyl group or a substituted or unsubstituted aryl group; R³, R⁴, R⁵ and R⁶ each represents a substituted or unsubstituted alkyl group; L¹, L², L³, L⁴ and L⁵ each represents a substituted or unsubstituted methine group, and the substituents on L¹ to L⁵ may be bonded to each other to form a ring; j represents 0, 1 or 2; k represents 0 or 1; X¹⁻ represents an i-valent anion; and i represents an integer of 1 or more.
(7) The optical information-recording medium according to any one of items (1) to (6) above, wherein the cyanine dye compound is represented by the following formula (IV) : 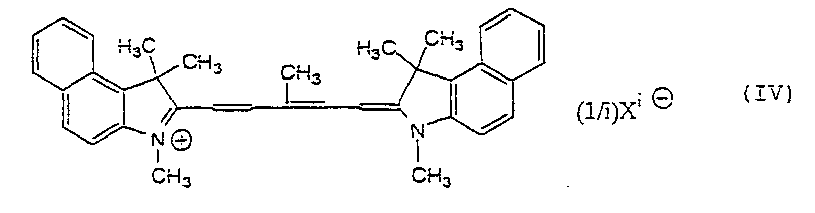 wherein Xⁱ⁻ represents an i-valent anion and i represents an integer of 1 or more.
(8) The optical information-recording medium according to any one of items (5) to (7) above, wherein p in formula (I) is 1 to 3 and Xⁱ⁻ in formula (II), (III) or (IV) is the naphthol compound of formula (I).
(9) The optical information-recording medium according to any one of items (1) to (8) above, wherein said recording layer contains a compound represented by the following formula (A1) or (A2): 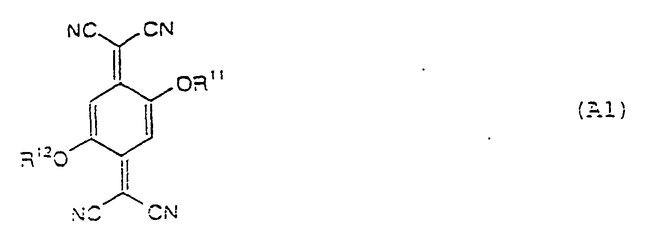 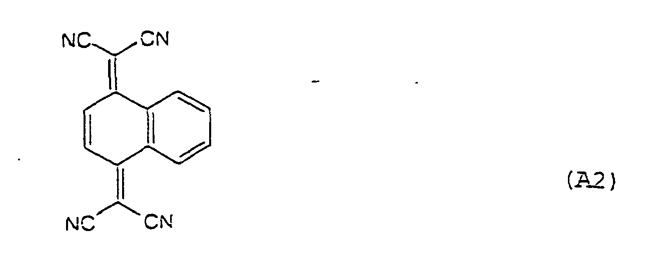 wherein R¹¹ and R¹² each represents a substituted or unsubstituted hydrocarbon group.
(10) The optical information-recording medium according to any one of items (1) to (9) above, further comprising a light-reflecting layer which comprises a metal and which is provided on said recording layer.
(11) The optical information-recording medium according to any one of items (1) to (10) above,
   wherein said substrate is a transparent disc having a thickness of 1.2 ± 0.2 mm and having formed thereon a pre-groove at a track pitch of from 1.4 to 1.8 µm, and
   wherein said recording layer is provided on the pre-groove-formed surface of the substrate.
(12) The optical information-recording medium according to any one of items (1) to (10) above,
   wherein said substrate is a transparent disc having a thickness of 0.6 0.1 mm and having formed thereon a pre-groove at a track pitch of from 0.6 to 0.9 µm, and
   wherein said recording layer is provided on the pre-groove-formed surface of the substrate.
(13) The optical information-recording medium according to item (12) above, which comprises two sets of said substrate each having thereon the recording layer and which has a thickness of from 1.2 ± 0.2 mm,
   wherein said substrates both have a diameter of 120 ± 0.3 mm, and
   wherein said two sets of the substrates are laminated so that the substrates both become outer layers.
(14) The optical information-recording medium according to item (12) above, further comprising a protective substrate which is a transparent disc having the same shape as said substrate,
   wherein said substrate has a diameter of 120 ± 0.3 mm,
   wherein said protective substrate is provided on the recording layer side, and
   wherein the optical information-recording medium has a thickness of from 1.2 ± 0.2 mm.
(15) A method for recording information, comprising irradiating an optical information-recording medium with a laser beam having a wavelength of 750 nm to 800 nm, wherein said optical information-recording medium is one according to any one of items (1) to (11) above.
(16) A method for recording information, comprising irradiating an optical information-recording medium with a laser beam having a wavelength of 630 nm to 680 nm, wherein said optical information-recording medium is one according to any one of items (1) to (10) and (12) to (14) above.

### DETAILED DESCRIPTION OF THE INVENTION

The optical information-recording medium according to the present invention has a feature that the recording layer contains a naphthol compound represented by the following formula (I) and a cyanine dye compound: 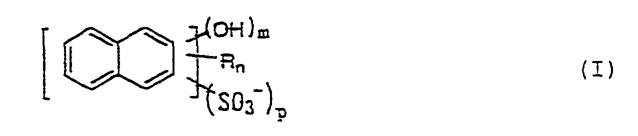 wherein R represents a monovalent substituent other than a hydroxyl group and a SO₃⁻ group; m represents an integer of from 1 to 4; n represents an integer of from 0 to 7; and p represents an integer of from 0 to 7, provided that m + n + p is 8 or less, when n represents an integer of 2 or more, a plurality of R groups may be the same or different, and when m = p = 2, two hydroxyl groups are not substituted at the 1-and 5-positions or at the 1- and 8-positions at the same time.

In the present specification, the numer of the substitution position on the naphthalene ring is determined with regarding hydroxyl group as the main substituent group.
m preferably represents 1 or 2, and hydroxyl group is preferably substituted at a position(s) selected from 1-, 2-and 7-positions. In particular, it is preferred that m is 2 and hydroxyl groups are substituted at 2- and 7-positions. It is preferred that p is 1 or more and the naphthol compound is anion. p is more preferably 1, 2 or 3, and particularly preferably 2. When p is 2, it is preferred that SO₃⁻ groups are substituted at 3- and 6-positions.

Naphthol compounds represented by formula (I) are described in detail below. In formula (I), R preferably represents a substituent selected from an alkyl group having from 1 to 18 carbon atoms, an alkenyl group having from 2 to 18 carbon atoms, an alkynyl group having from 2 to 18 carbon atoms, an aryl group having from 6 to 14 carbon atoms, a heterocyclic group having from 4 to 9 carbon atoms, -COR²¹, -SO₂R²¹, -SOR²¹, -CO₂⁻, -CO₂R²¹, -OR²⁴, -SR²¹, -OCOR²¹, -OSO₂R²¹, -CONR²¹R²², -SO₂NR²¹R²², -OCONR²¹R²², -OSO₂NR²¹R²², -NR²¹R²², -NR²¹COR²², -NR²¹SO₂R²², -NR²¹CO₂R²², -NR²¹CONR²²R²³, -NR²¹SO₂NR²²R²³, a halogen atom, a nitro group, and a cyano group; R²¹, R²² and R²³ each represents a hydrogen atom, an alkyl group having from 1 to 18 carbon atoms, an alkenyl group having from 2 to 18 carbon atoms, an alkynyl group having from 2 to 18 carbon atoms, an aryl group having from 6 to 14 carbon atoms, or a heterocyclic group having from 4 to 9 carbon atoms; R²⁴ represents an alkyl group having from 1 to 18 carbon atoms, an alkenyl group having from 2 to 18 carbon atoms, an alkynyl group having from 2 to 18 carbon atoms, an aryl group having from 6 to 14 carbon atoms, or a heterocyclic group having from 4 to 9 carbon atoms; and R may have a substituent, and examples of the substituent include those exemplified above as the examples of R group.

Preferred specific examples of naphthalene compounds represented by formula (I) are shown below. The substitution positions of OH group, SO₃⁻ group and R group each represents the substitution position to the naphthalene ring.

**TABLE 1**

| Comp. No. | m | Substitution Position of OH | p | Substitution Position of SO₃⁻ | n | R (substitution position) |
|---|---|---|---|---|---|---|
| B-1 | 1 | 1 | 2 | 3, 6 | 0 | |
| B-2 | 1 | 2 | 2 | 3, 6 | 0 | |
| B-3 | 1 | 2 | 2 | 3, 5 | 0 | |
| B-4 | 1 | 1 | 2 | 3, 5 | 0 | |
| B-5 | 2 | 2, 7 | 2 | 3, 6 | 0 | |
| B-6 | 2 | 2, 6 | 2 | 1, 5 | 0 | |
| B-7 | 2 | 1, 7 | 2 | 3, 6 | 0 | |
| B-8 | 2 | 1, 4 | 1 | 2 | 0 | |
| B-9 | 3 | 1, 3, 8 | 1 | 6 | 0 | |
| B-10 | 1 | 1 | 1 | 4 | 0 | |
| B-11 | 2 | 1, 2 | 1 | 4 | 0 | |
| B-12 | 1 | 1 | 0 | | 1 | -CO₂H (2) |
| B-13 | 1 | 2 | 0 | | 1 | -CO₂CH₃ (3) |
| B-14 | 2 | 1, 4 | 0 | | 2 | -Cl (2, 3) |
| B-15 | 1 | 1 | 0 | | 0 | |
| B-16 | 1 | 2 | 0 | | 0 | |
| B-17 | 2 | 2, 7 | 0 | | 0 | |
| B-18 | 2 | 1, 5 | 0 | | 0 | |
| B-19 | 1 | 1 | 0 | | 1 | -NHCOCH₃ (2) |
| B-20 | 1 | 1 | 0 | | 1 | -NHSO₂CH₅ (5) |
| B-21 | 1 | 1 | 2 | 3, 6 | 1 | -NHCOCH₃ (8) |
| B-22 | 1 | 2 | 2 | 3, 6 | 1 | -NHCOCH₃ (8) |

Compounds represented by formula (I) according to the present invention can be synthesized, in general, by modifying a corresponding naphthol compound with a functional group. For example, Compounds (B-1), (B-2) and. (B-3) can be easily synthesized by treating a corresponding naphthol compound with concentrated sulfuric acid or fuming sulfuric acid. However, many of the above compounds are commercially available and they can be utilized.

The cyanine dye compound for use in the present invention is preferably represented by the following formula (II) : 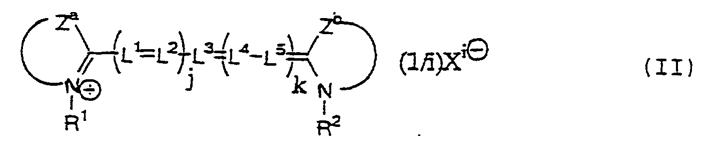 wherein Z^{a} and Z^{b} each represents an atomic group necessary to form a 5- or 6-membered nitrogen-containing heterocyclic ring, and the ring may be condensed with a ring (e.g., an aromatic ring); R¹ and R² each represents a substituted or unsubstituted alkyl group or a substituted or unsubstituted aryl group; L¹, L², L³, L⁴ and L⁵ each represents a substituted or unsubstituted methine group, and the substituents on L¹ to L⁵ may be linked to each other to form a ring; j represents 0, 1 or 2; k represents 0 or 1; Xⁱ⁻ represents an i-valent anion; and i represents an integer of 1 or more.

Examples of 5- or 6-membered nitrogen-containing heterocyclic rings (nuclei) represented by Z^{a} and Z^{b} include, e.g., a thiazole nucleus, a benzothiazole nucleus, a naphthothiazole nucleus, a thiazoline nucleus, an oxazole nucleus, a benzoxazole nucleus, a naphthoxazole nucleus, an oxazoline nucleus, a selenazole nucleus, a benzoselenazole nucleus, a naphthoselenazole nucleus, a selenazoline nucleus, a tellurazole nucleus, a benzotellurazole nucleus, a naphtho-tellurazole nucleus, a tellurazoline nucleus, an imidazole nucleus, a benzimidazole nucleus, a naphthoimidazole nucleus, a pyridine nucleus, a quinoline nucleus, an isoquinoline nucleus, an imidazo[4,5-b]quinoxaline nucleus, an oxadiazole nucleus, a thiadiazole nucleus, a tetrazole nucleus, and a pyrimidine nucleus can be exemplified. Of these, a benzothiazole nucleus, an imidazole nucleus, a naphthoimidazole nucleus, a quinoline nucleus, an isoquinoline nucleus, an imidazo[4,5-b]quinoxaline nucleus, a thiadiazole nucleus, a tetrazole nucleus, and a pyrimidine nucleus are preferred. A benzene ring and a naphthoquinone ring may further be condensed with these rings.

The above 5- or 6-membered nitrogen-containing heterocyclic rings may have a substituent. Examples of the preferred substituents (atoms) include a halogen atom, a substituted or unsubstituted alkyl group, and a substituted or unsubstituted aryl group. As the halogen atom, a chlorine atom is preferred. As the alkyl group, a straight chain alkyl group having from 1 to 6 carbon atoms is preferred. Examples of the substituents of the alkyl group include an alkoxyl group (e.g., methoxy) and an alkylthio group (e.g., methylthio). As the aryl group, a phenyl group is preferred.

The alkyl group represented by R¹ and R² may have a substituent, and is preferably a straight chain, cyclic or branched alkyl group having from 1 to 18 carbon atoms (more preferably from 1 to 8, and particularly preferably from 1 to 6, carbon atoms). The aryl group represented by R¹ and R² may have a substituent, and is preferably an aryl group which may have a substituent having from 6 to 18 total carbon atoms.

As the preferred examples of the substituents for the alkyl group and the aryl group represented by R¹ and R², the following groups can be exemplified, e.g., a substituted or unsubstituted aryl group having from 6 to 18 carbon atoms (e.g., phenyl, chlorophenyl, anisyl, toluyl, 2,4-di-t-amyl, 1-naphthyl), an alkenyl group (e.g., vinyl, 2-methylvinyl), an alkynyl group (e.g., ethynyl, 2-methylethynyl, 2-phenyl-ethynyl), a halogen atom (e.g., F, Cl, Br, I), a cyano group (examples of the cyano-substituted alkyl groups include cyanoethyl), a hydroxyl group (examples of the hydroxyl-substituted alkyl group include hydroxyethyl and 3-hydroxypropyl), a carboxyl group (examples of the carboxyl-substituted alkyl group include carboxyethyl, 3-carboxypropyl and 3-carboxybutyl), a sulfo group (examples of the sulfo-substituted alkyl group include sulfoethyl and 3-sulfopropyl), an acyl group (e.g., acetyl, benzoyl, salicyloyl, pivaloyl), an alkoxyl group (e.g., methoxy, butoxy, cyclohexyloxy), an aryloxy group (e.g., phenoxy, 1-naphthoxy), an alkylthio group (e.g., methylthio, butylthio, benzylthio, 3-methoxypropylthio), an arylthio group (e.g., phenylthio, 4-chlorophenylthio), an alkylsulfonyl group (e.g., methanesulfonyl, butanesulfonyl), an arylsulfonyl group (e.g., benzenesulfonyl, p-toluenesulfonyl), a carbamoyl group having from 1 to 10 carbon atoms, an amido group having from 1 to 10 carbon atoms, an acyloxy group having from 2 to 10 carbon atoms, an alkoxycarbonyl group having from 2 to 10 carbon atoms, and a heterocyclic group (e.g., an aromatic heterocyclic ring such as pyridyl, thienyl, furyl, thiazolyl, imidazolyl and pyrazolyl, an aliphatic heterocyclic ring such as a pyrrolidine ring, a piperidine ring, a morpholine ring, a pyran ring, a thiopyran ring, a dioxane ring, a dithiolan ring).

In the present invention, R¹ and R² each preferably represents a straight chain alkyl group having from 1 to 8 carbon atoms (preferably from 1 to 6, particularly preferably from 1 to 4 carbon atoms) substituted with an unsubstituted straight chain alkyl group having from 1 to 8 carbon atoms (preferably from 1 to 6, particularly preferably from 1 to 4 carbon atoms), or an alkoxyl group (in particular, methoxy), or an alkylthio group (in particular, methylthio).

Each of the methine groups represented by L¹, L², L³, L⁴ and L⁵ may have a substituent. Preferred examples of the substituents include an alkyl group having from 1 to 18 carbon atoms, an aralkyl group, and the groups exemplified above as the preferred substituents for the alkyl group and the aryl group represented by R¹ and R², and of these groups, an alkyl group (e.g., methyl), an aryl group (e.g., phenyl), a halogen atom (e.g., Cl, Br), and an aralkyl group (e.g., benzyl) are preferred. In the present invention, j and k each preferably represents 0 or 1. Particularly preferably j + k is 1 or 2.

The substituents on L¹ to L⁵ may be linked to each other to form a ring. A preferred ring member is a 5- or 6-member and two or more of these rings may be condensed. The position of linking varies according to the number of methine chains to be formed. For example, when the methine chain formed by L¹ to L⁵ is a pentamethine chain, the preferred linking position is L¹ and L³, L² and L⁴, and L³ and L⁵. When a double condensed ring is formed, the preferred linking position is L¹, L³ and L⁵, and in this case L¹ and R¹, L⁵ and R², and L³ and R² may be linked to each other to form a ring, and a preferred ring member is a 5- or 6-member. In the present invention, the ring formed by the substituents on L¹ to L⁵ is preferably a cyclohexene ring.

The anion represented by Xⁱ⁻ may be an inorganic or organic anion, but is preferably a polyvalent anion in which i is 2 or more. Examples of inorganic polyvalent anions include a heteropolyacid ion such as a sulfate ion, a phosphate ion, a hydrogenphosphate ion, and a tungsto-phosphate ion. Examples of organic polyvalent anions include a carboxylate ion (e.g., a succinate ion, a maleate ion, a fumarate ion, a terephthalate ion), an aryldisulfonate ion (e.g., a benzene-1,3-disulfonate ion, 3,3'-biphenyl-disulfonate ion, a naphthalene-1,5-disulfonate ion, a naphthalene-1,6-disulfonate ion, a naphthalene-2,6-disulfonate ion, 1-methylnaphthalene-2,6-disulfonate ion, a naphthalene-2,7-disulfonate ion, a naphthalene-2,8-disulfonate ion), an aryltrisulfonate ion (e.g., a naphthalene-1,3,5-trisulfonate ion, a naphthalene-1,3,6-trisulfonate ion, a naphthalene-1,3,7-trisulfonate ion), an aryltetrasulfonate ion (e.g., a naphthalene-1,3,5,7-tetra-sulfonate ion), an arylpolysulfonate ion (e.g., a butane-1,4-disulfonate ion, a cyclohexane-1,4-disulfonate ion), and a polysulfuric acid monoester ion (e.g., a propylene glycol-1,2-disulfate ion, a polyvinyl alcohol polysulfate ion).

In formula (II), Xⁱ⁻ preferably represents an aromatic disulfonate ion or an aromatic trisulfonate ion, more preferably a naphthalenedisulfonate ion or a naphthalenetrisulfonate ion, and particularly preferably a naphthalenedisulfonate ion. Most preferred is the case in which X¹⁻ is a naphthol compound anion of formula (I), and the preferred embodiments thereof are as described above.

The cyanine dye compound for use in the present invention is more preferably represented by the following formula (III): 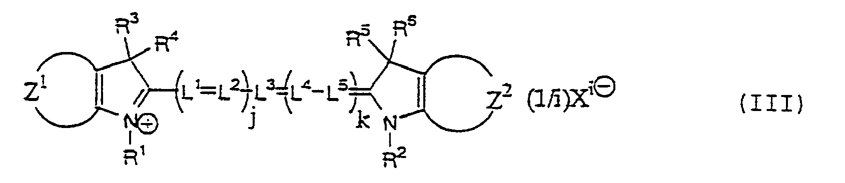 wherein Z¹ and Z² each represents an atomic group necessary to form an indolenine nucleus or a benzoindolenine nucleus; R¹ and R² each represents a substituted or unsubstituted alkyl group or a substituted or unsubstituted aryl group; R³, R⁴, R⁵ and R⁶ each represents a substituted or unsubstituted alkyl group; L¹, L², L³, L⁴ and L⁵ each represents a substituted or unsubstituted methine group, and the substituents on L¹ co L⁵ may be linked to each other to form, a ring; j represents 0, 1 or 2; k represents 0 or 1; Xⁱ⁻ represents an i-valent anion; and i represents an integer of 1 or more.

The indolenine nucleus or the benzoindolenine nucleus represented by Z¹ and Z² may have a substituent. Examples of the substituents (atoms) include a halogen atom and an aryl group. As the halogen atom, a chlorine atom is preferred. As the aryl group, a phenyl group is preferred.

Each of the alkyl groups represented by R³, R⁴, R⁵ and R⁶ is preferably a straight chain, branched or cyclic alkyl group having from 1 to 18 carbon atoms. R³ and R⁴, and R⁵ and R⁶ may be linked to each other to form a ring. Each of the alkyl groups represented by R³, R⁴, R⁵ and R⁶ may have a substituent, and the preferred examples of the substituents include those exemplified above as the preferred substituents of the alkyl group and the aryl group represented by R¹ and R². In the present invention, each of the alkyl groups represented by R³, R⁴, R⁵ and R⁶ is preferably an unsubstituted straight chain alkyl group having from 1 to 6 carbon atoms (in particular, methyl and ethyl).

R¹ and R², L¹, L², L³, L⁴ and L⁵, j and k, and Xⁱ⁻ and i in formula (III) have the same meaning as those explained in formula (II). Preferred examples of them are also the same as those described in formula (II).

The cyanine dye compound for use in the present invention is particularly preferably represented by the following formula (IV): 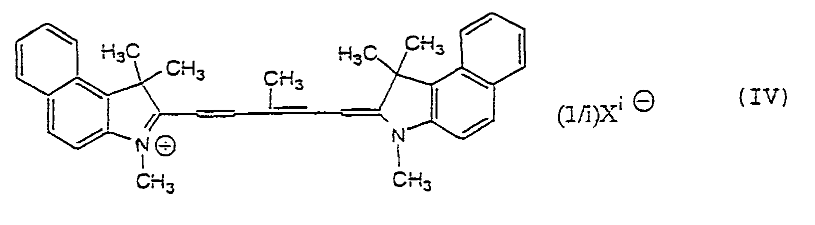 wherein Xⁱ⁻ and i each has the same meaning as described in formula (II). Preferred examples of these are also the same as those described in formula (II).

Specific examples of the compounds represented by formula (II), (III) or (IV) are shown below.

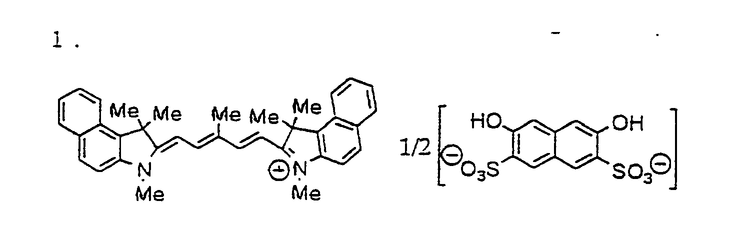

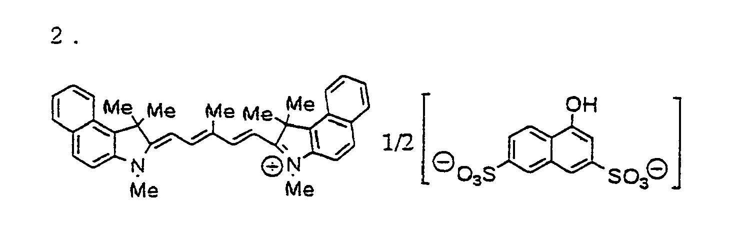

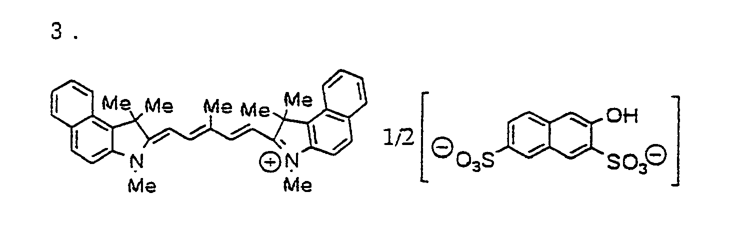

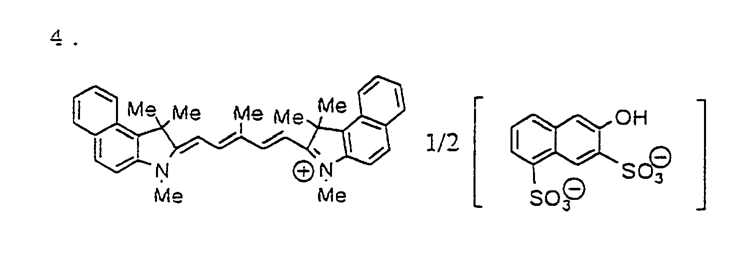

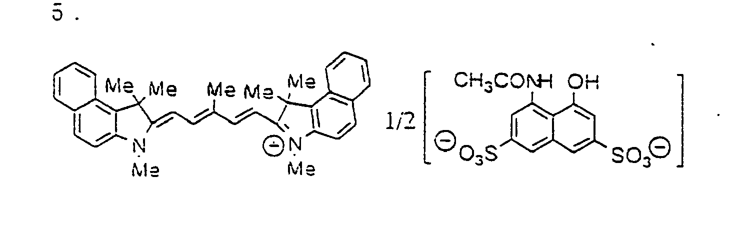

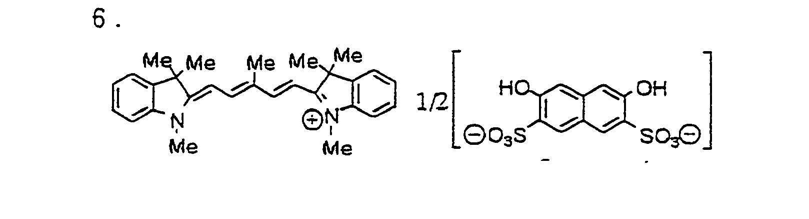

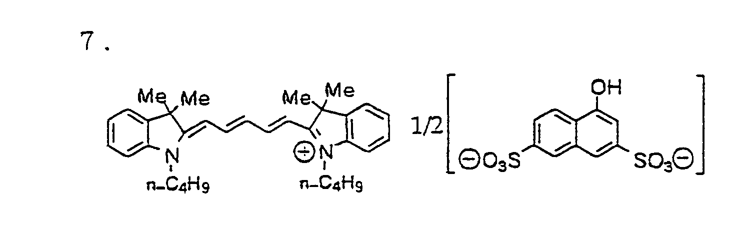

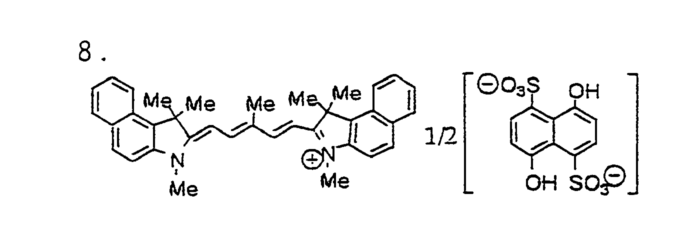

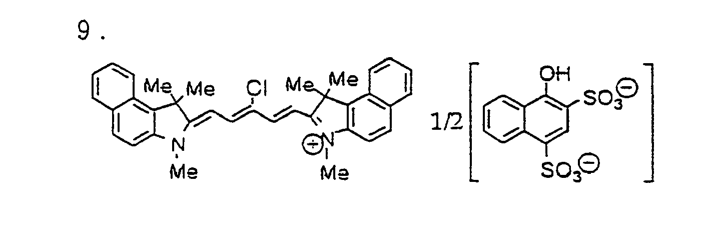

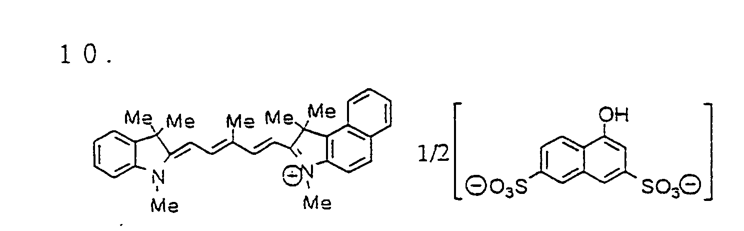

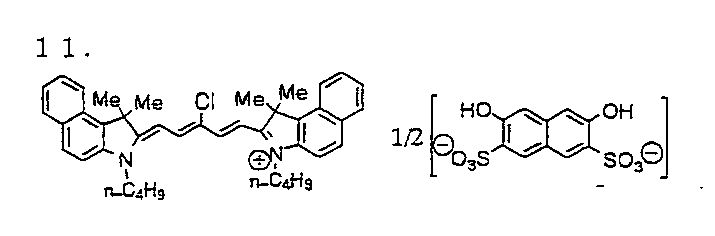

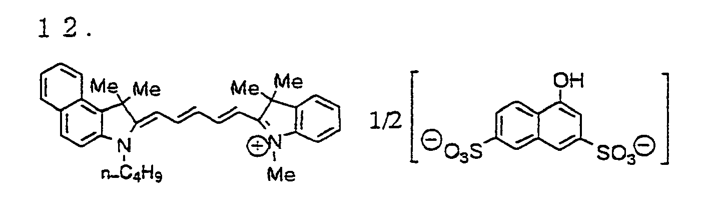

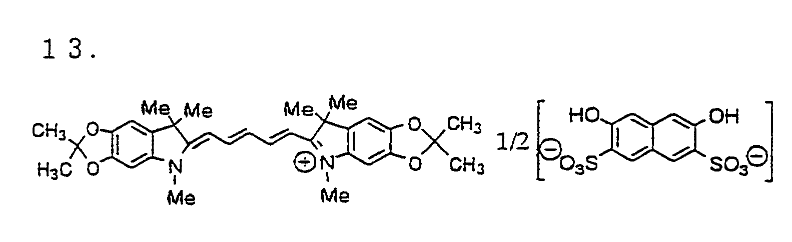

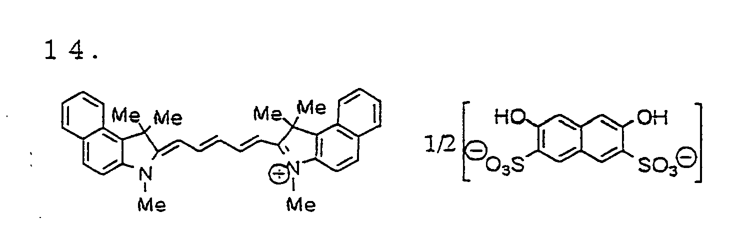

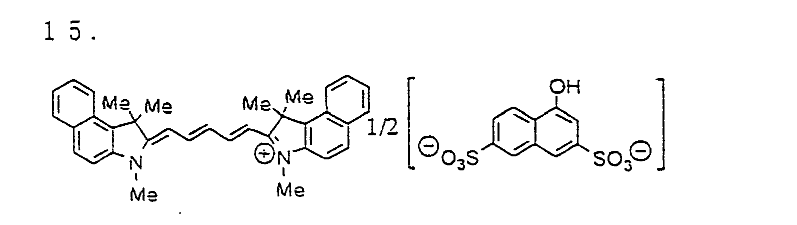

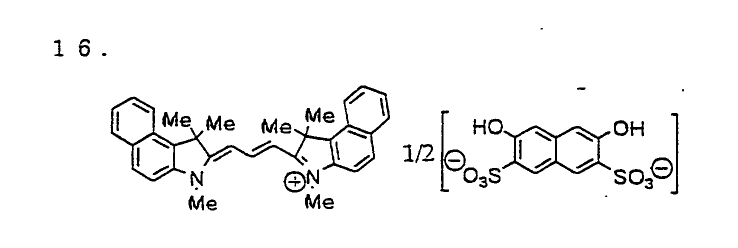

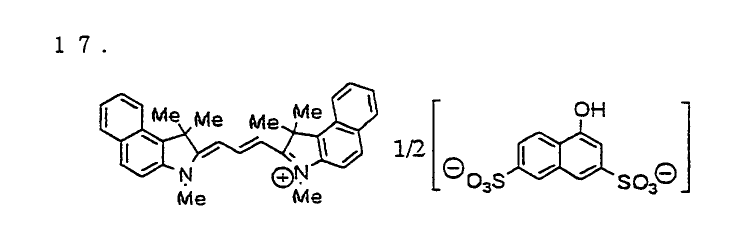

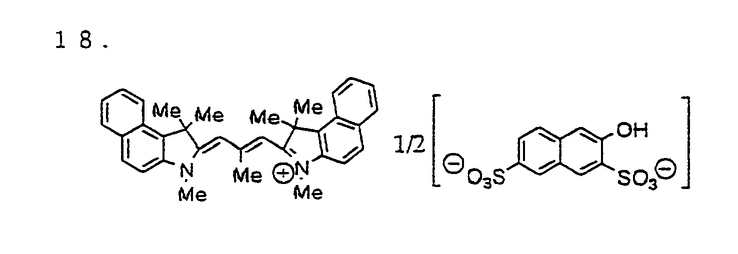

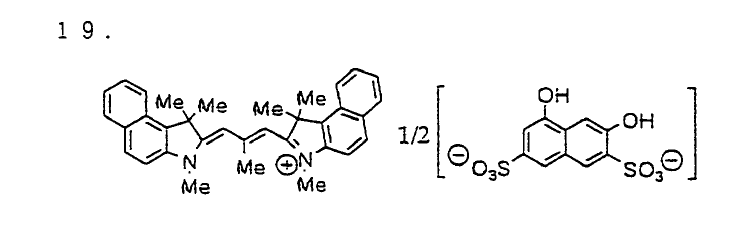

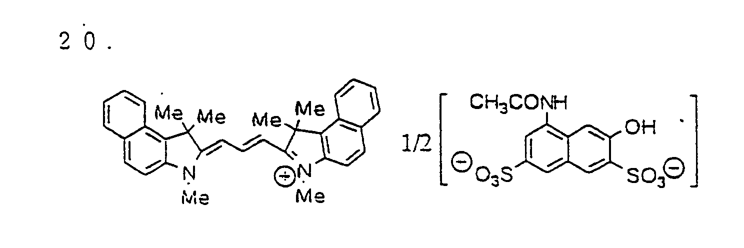

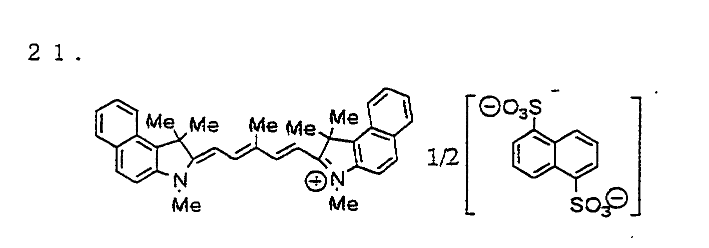

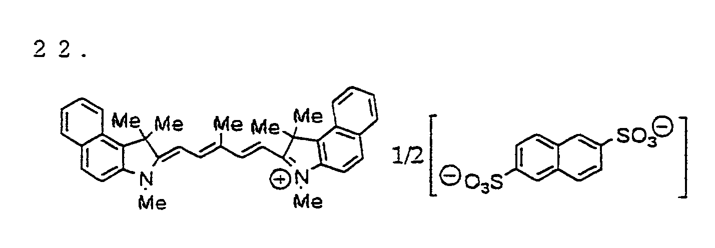

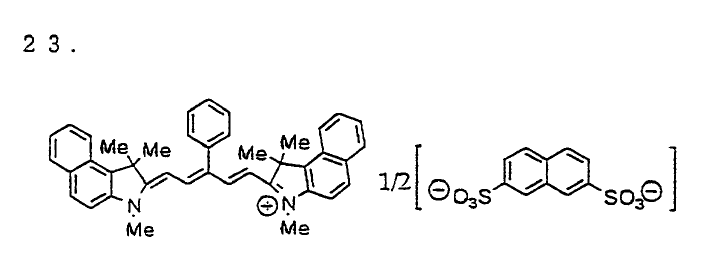

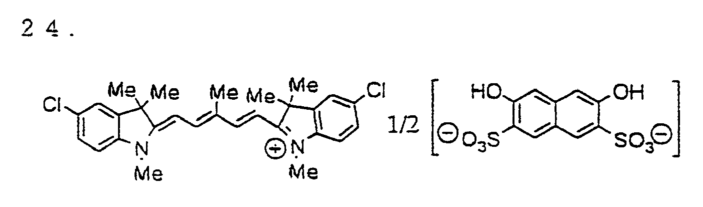

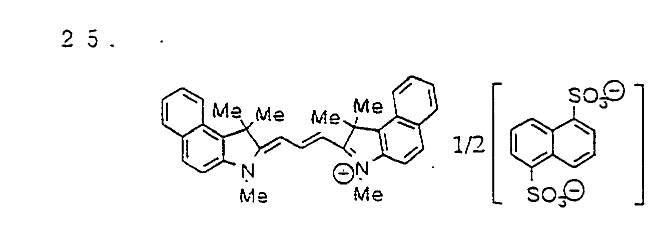

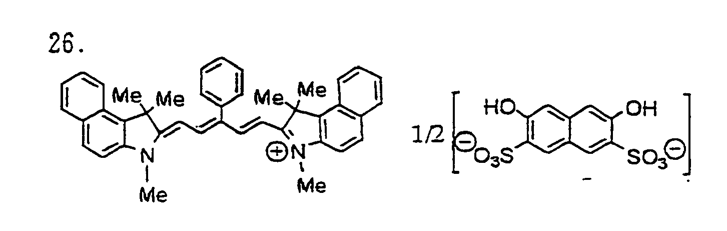

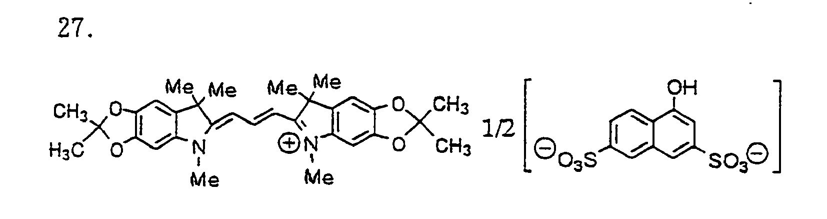

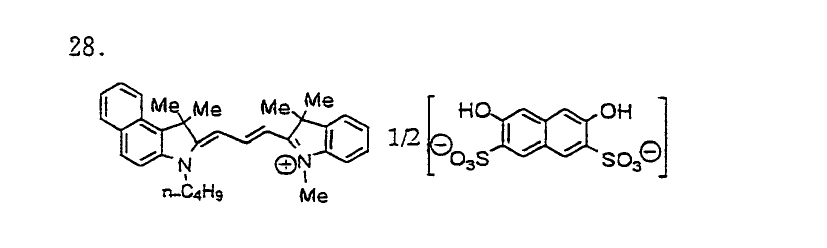

The compounds represented by formulae (II), (III) and (IV) according to the present invention may be used alone or in combination of two or more. Further, the compounds represented by formulae (II), (III) and (IV) according to the present invention can easily be synthesized with referring to the following well-known literature.

For example, the following literature can be exemplified: F.M. Hamer, The Cyanine Dyes and Related Compounds 5, on and after pp. 55, Interscience Publishers, New York (1964); Nikolai Tyutyulkov, Jurgen Fabian, Achim Ulehlhorn, Fritz Dietz, and Alia Tadjer, Polymethine Dyes, pp. 23 to 38, St. Kliment Ohridski University Press, Sophia; D.M. Sturmer, Heterocyclic Compounds-Special Topics in Heterocyclic Chemistry, Chapter 18, Clause 14, pp. 482 to 515, John Wiley & Sons, New York, London (1977); and Rod's Chemistry of Carbon Compounds, 2nd Ed., Vol. IV, Part B, Chapter 15, pp. 369 to 422 (1977), 2nd Ed., Vol. IV, Part B, Chapter 15, pp. 267 to 296, (1985), Elsvier Science Public Company Inc., New York.

The molar ratio of the use amount of the naphthol compound to the use amount of the cyanine compound is preferably from 0.1 to 10, more preferably from 0.25 to 4, and particularly preferably from 0.3 to 3.

For introducing a polyvalent anion as a counter ion, there is a method of dissolving a cyanine dye having a monovalent counter ion in an appropriate solvent, adding a solution of a polyvalent acid or a salt thereof to the above solution containing the dye and further, if necessary, adding a solvent which makes the dye hardly soluble, to thereby precipitate crystals of the cyanine dye having a polyvalent ion as a counter ion, which method is most simple and suitable for the synthesizing a large amount of compound. As another method, a method of exchanging a counter ion using an ion exchange resin can be exemplified.

The compounds according to the present invention are specifically explained with referring to synthesis examples.

### SYNTHESIS EXAMPLE 1

### Synthesis of Exemplified Compound 1

Exemplified Compound 1 according to the present invention was synthesized according to the following reaction scheme.

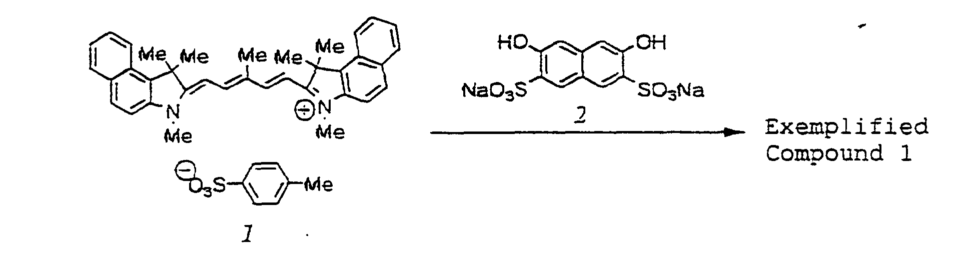

To 50 ml of methanol was added 5.00 g of Dye Compound 1 and stirred and dissolved at 50°C. To the above solution was dropwise added a solution of 50 ml of water containing 1.64 g of Compound 2 over 30 minutes, and then cooled with ice water. The crystals precipitated were filtered, washed with water and methanol, and then dried, thus 4.50 g of Exemplified Compound 1 was obtained as deep green crystals. Decomposition temperature: 240°C.

### SYNTHESIS EXAMPLE 2

### Synthesis of Exemplified Compound 2

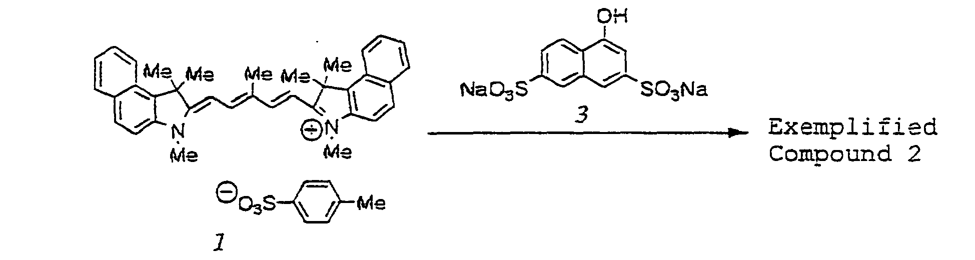

To 50 ml of methanol was added 5.00 g of Dye Compound 1 and stirred and dissolved at 50°C. To the above solution was dropwise added a solution of 20 ml of water containing 3.90 g of Compound 3 over 10 minutes, further 30 ml of water was dropwise added over 15 minutes, and then cooled with ice water. The crystals precipitated were filtered, washed with water and methanol, and then dried, thus 4.45 g of Exemplified Compound 2 was obtained as deep purple crystals. Decomposition temperature: 256°C.

It is preferred for the information-recording medium according to the present invention to contain the compound represented by formula (A1) or (A2) in the recording layer. 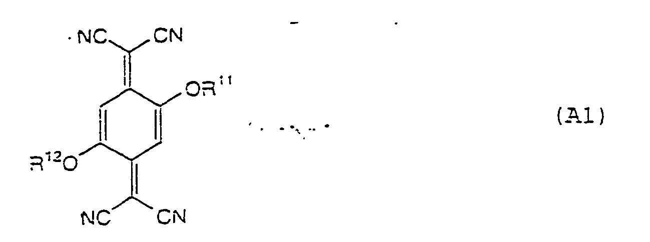 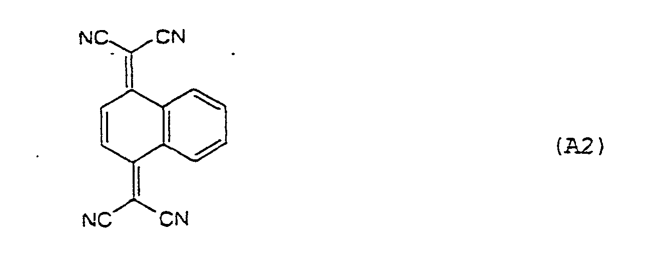 wherein R¹¹ and R¹² each represents a hydrocarbon group. R¹¹ and R¹² each preferably represents an alkyl group having from 1 to 18 carbon atoms, an alkenyl group having from 2 to 18 carbon atoms, an alkynyl group having from 2 to 18 carbon atoms, or an aryl group having from 6 to 14 carbon atoms, and each of these hydrocarbon groups may have a substituent. Examples of the substituents of these groups are the same as the substituents exemplified above as the substituents of R¹ and R² in formula (II). Specific examples of the preferred compounds represented by formula (A1) are shown below
(A1-1) to (A1-12) 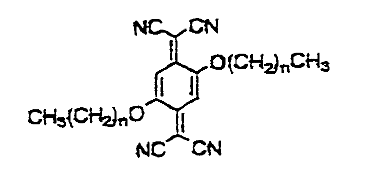 wherein n represents from 0 to 11.
(A-13) 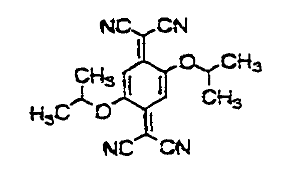
(A1-14) 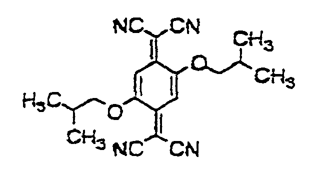
(A1-15)

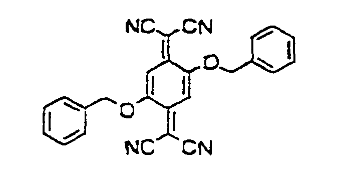

The compound represented by formula (A1) or (A2) according to the present invention may be used alone or in combination of two or more thereof. The compound represented by formula (A1) or (A2) according to the present invention can easily be synthesized according to the methods disclosed in JP-A-10-151861.

The optical information-recording medium according to the present invention comprises a substrate having provided thereon a recording layer containing the above-described naphthol compound represented by formula (I) and the cyanine dye compound. The cyanine dye compound according to the present invention can be advantageously used in CD-R or DVD-R as an optical information-recording medium. In a CD-R type optical information-recording medium, a dye compound having a pentamethine chain is advantageously used among the cyanine dye compound represented by formula (II), (III) or (IV).

On the other hand, in a DVD-R type optical information-recording medium, a dye compound having a trimethine chain is advantageously used among the cyanine dye compound represented by formula (II), (III) or (IV).

The optical information-recording medium according to the present invention preferably has the following constitution. The CD-R type optical information-recording medium preferably has the constitution comprising a transparent disc-like substrate having a thickness of 1.2 ± 0.2 mm having formed thereon a pre-groove having a track pitch of from 1.4 to 1.8 µm, and having coated thereon a recording layer, a light reflecting layer and a protective layer in this order. The DVD-R type optical information-recording medium is preferably either of the following two embodiments, that is, the constitution which comprises two laminates each comprising a transparent disc-like substrate having a thickness of 0.6 + 0.1 mm and having formed thereon a pre-groove having a track pitch of from 0.6 to 0.9 µm, and having provided a recording layer and a light reflecting layer on the surface of the side of the substrate on which the pre-groove is formed, and these two laminates are adhered into a thickness of 1.2 + 0.2 mm with each recording layer inside; and another constitution which comprises a laminate comprising a transparent disc-like substrate having a thickness of 0.6 + 0.1 mm and having formed thereon a pre-groove having a track pitch of from 0.6 to 0.9 µm, and having provided a recording layer and a light reflecting layer on the surface of the side of the substrate on which the pre-groove is formed, and a transparent disc-like protective substrate having the same shape as the above disc-like substrate of the laminate, and the laminate and the protective substrate are adhered into a thickness of 1.2 ± 0.2 mm with the recording layer inside. In the above DVD-R type optical information-recording medium, a protective layer may further be provided on the light reflecting layer.

The DVD-R type optical information-recording medium can be produced with fundamentally the same materials as used in the production of the CD-R type optical information-recording medium except for using a substrate having a pre-groove of narrower track pitch than that in the CD-R type optical information-recording medium for achieving high recording density. That is, the DVD-R type optical information-recording medium can be produced by preparing two laminates comprising a substrate having formed thereon a recording layer, a light reflecting layer, and a protective layer as needed in this order, and adhering these two laminates with an adhesive, or adhering the laminate with a disc-like protective substrate having the same shape as the substrate of the laminate with an adhesive similarly to the above adhering method. Therefore, the production of the DVD-R type optical information-recording medium is performed in the same manner as the production of the CD-R type optical information-recording medium except for the last stage of the adhesion of the substrates.

The optical information-recording medium in the present invention can be produced according to the following methods, for instance. The substrate for the optical information-recording medium can be arbitrarily selected from among various materials which are used as the substrates of conventional optical information-recording media. As the substrate materials, for example, glass; polycarbonate; acrylate resins such as polymethyl methacrylate; vinyl chloride resins such as polyvinyl chloride and vinyl chloride copolymers; epoxy resins; amorphous polyolefin and polyester can be exemplified and, if desired, these materials can be used in combination. These materials can be used in the form of a film or as a rigid substrate. Of the above materials, polycarbonate is preferably used in light of moisture resistance, dimensional stability and inexpensiveness.

An undercoat layer may be coated on the surface of the side of the substrate on which a recording layer is provided for the purpose of improving plane property and adhesion strength and protecting the recording layer. As the materials of the undercoat layer, high polymer materials such as polymethyl methacrylate, an acrylic acid-methacrylic acid copolymer, a styrene-maleic anhydride copolymer, polyvinyl alcohol, N-methylolacrylamide, a styrene-vinyl toluene copolymer, chlorosulfonated polyethylene, nitrocellulose, polyvinyl chloride, chlorinated polyolefin, polyester, polyimide, a vinyl acetate-vinyl chloride copolymer, an ethylene-vinyl acetate copolymer, polyethylene, polypropylene, and polycarbonae; and a surface improver such as a silane coupling agent can be exemplified. The undercoat layer can be formed by dissolving or dispersing the above materials in an appropriate solvent to prepare a coating solution, and coating the thus-obtained coating solution on the substrate surface by coating methods such as spin coating, dip coating, and extrusion coating. The layer thickness of the undercoat layer is generally from 0.005 to 20 µm, preferably from 0.01 to 10 µm.

On a substrate (or an undercoat layer) are generally formed grooves for tracking or concavities and convexities such as address signals representing information (a pre-groove). This pre-groove is preferably formed directly on a substrate when a resin material such as polycarbonate is injection molded or extrusion molded. The pitch (track pitch) of the pre-groove differs with a CD-R type and a DVD-R type. It is preferred in a CD-R type in general the pre-groove be formed with the track pitch of from 1.4 to 1.8 µm wide, and in a DVD-R type from 0.6 to 0.9 µm wide.

The depth of the pre-groove is preferably in the range of from 30 to 200 nm, and its half-value width is preferably in the range of from 0.2 to 0.9 µm. Further, the sensitivity can be improved without hardly reducing the reflectance by making the depth of the pre-groove in the range of from 150 to 200 nm, which is particularly advantageous for the production of a CD-R type optical information-recording medium.

A dye recording layer is provided on a substrate. The dye recording layer contains the above-described naphthol compound represented by formula (I) and a cyanine dye compound. Dyes and compounds other than these compounds may be used in combination. A dicarbocyanine dye having a benzoindolenine nucleus is preferably used in the recording layer in combination, which is particularly preferred to be used in a CD-R type optical information-recording medium.

It is further preferred for the recording layer to contain various discoloration inhibitors for the purpose of improving light fastness of the recording layer. As the discoloration inhibitors, an organic oxidizing agent and a singlet oxygen quencher can be exemplified. The compounds disclosed in JP-A-10-151861 are preferably used as the organic oxidizing agent used as the discoloration inhibitor, above all, a compound represented by formula (A1) or (A2) is preferred. Singlet oxygen quenchers described in publications such as well-known patent specifications can be used in the present invention. As specific examples, those disclosed in JP-A-58-175693, JP-A-59-81194, JP-A-60-18387, JP-A-60-19586, JP-A-60-19587, JP-A-60-35054, JP-A-60-36190, JP-A-60-36191, JP-A-60-44554, JP-A-60-44555, JP-A-60-44389, JP-A-60-44390, JP-A-60-54892, JP-A-60-47069, JP-A-63-209995, JP-A-4-25492, JP-B-1-38680 (the term "JP-B" as used herein means an "examined Japanese patent publication"), JP-B-6-26028, German Patent 350,399, and Nihon Kagaku Gakkai-shi, the October 1992 issue, p. 1141.

As the preferred examples of singlet oxygen quenchers, the compound represented by the following formula (V) can be exemplified. 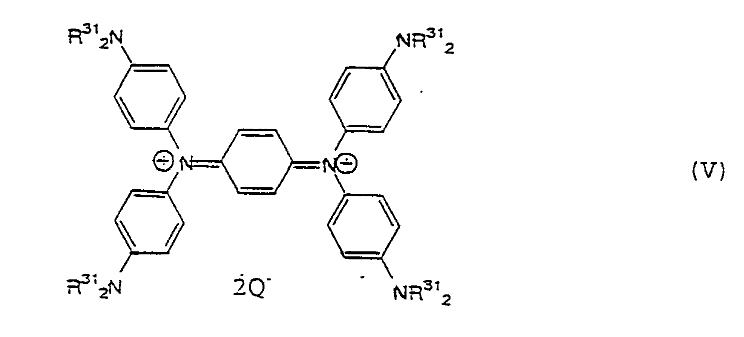 wherein R³¹ represents an alkyl group which may have a substituent, and Q⁻ represents an anion.

In formula (V), R³¹ generally represents an alkyl group having from 1 to 8 carbon atoms which may be substituted, and preferably an unsubstituted alkyl group having from 1 to 6 carbon atoms. As the substituents of the alkyl group, a halogen atom (e.g., F, Cl), an alkoxyl group (e.g., methoxy, ethoxy), an alkylthio group (e.g., methylthio, ethylthio), an acyl group (e.g., acetyl, propionyl), an acyloxy group (e.g., acetoxy, propionyloxy), a hydroxyl group, an alkoxycarbonyl group (e.g., methoxycarbonyl, ethoxycarbonyl), and an alkenyl group (e.g., vinyl), an aryl group (e.g., phenyl, naphthyl) can be exemplified. Of these, a halogen atom, an alkoxyl group, an alkylthio group, and an alkoxycarbonyl group are preferred, As the examples of anions represented by Q⁻, ClO₄⁻, AsF₆-, BF₄⁻, and SbF₆⁻ are preferred.

Examples of the compounds represented by formula (V) are shown in Table 2 below.

**TABLE 2**

| Compound No. | R³¹ | Q⁻ |
|---|---|---|
| 5-1 | CH₃ | ClO₄⁻ |
| 5-2 | C₂H₅ | ClO₄⁻ |
| 5-3 | n-C₃H₇ | ClO₄⁻ |
| 5-4 | n-C₄H₉ | ClO₄⁻ |
| 5-5 | n-C₅H₁₁ | ClO₄⁻ |
| 5-6 | n-C₄H₉ | SbF₆⁻ |
| 5-7 | n-C₄H₉ | BF₄⁻ |
| 5-8 | n-C₄H₉ | AsF₆⁻ |

The recording layer can be formed by dissolving the above-described naphthol compound, dye, quencher if necessary, and binder in a solvent to prepare a coating solution, coating the thus-obtained coating solution on the surface of a substrate, and then drying. The following compounds can be used as the solvent for the coating solution of the dye layer, e.g., esters such as butyl acetate and cellosolve acetate; ketones such as methyl ethyl ketone, cyclohexanone, and methyl isobutyl ketone; chlorinated hydrocarbons such as dichloromethane, 1,2-dichloroethane and chloroform; amides such as dimethylformamide; hydrocarbons such as cyclohexane; ethers such as tetrahydrofuran, ethyl ether, and dioxane; alcohols such as ethanol, n-propanol, isopropanol, n-butanol diacetone alcohol; fluorine-containing solvents such as 2,2,3,3-tetrafluoropropanol; and glycol ethers such as ethylene glycol monomethyl ether, ethylene glycol monoethyl ether, and propylene glycol monomethyl ether. These solvents can be used arbitrarily alone or in combination of two or more in consideration of the solubility of the dye to be used. The coating solution may further contain various additives such as an antioxidant, a UV absorber, a plasticizer, and a lubricant according to purposes.

When a binder is used, natural organic high molecular substances such as gelatin, a cellulose derivative, dextran, rosin, and rubber; and synthetic organic high polymers such as hydrocarbon resins such as polyethylene, polypropylene, polystyrene, and polyisobutylene; vinyl resins such as polyvinyl chloride, polyvinylidene chloride, and a polyvinyl chloride-polyvinyl acetate copolymer; acrylate resins such as polymethyl acrylate and polymethyl methacrylate; and initial condensation products of thermosetting resins such as polyvinyl alcohol, chlorinated polyethylene, epoxy resin, a butyral resin, a rubber derivative, and a phenol-formaldehyde resin can be used as the binder. When a binder is used as the material of the recording layer, the use amount of the binder is in general from 0.01 to 50 times (by weight) of the dye, preferably from 0.1 to 5 times (by weight). The dye concentration in the thus-prepared coating solution is generally from 0.01 to 10 wt%, preferably from 0.1 to 5 wt%.

Coating methods such as spray coating, spin coating, dip coating, roll coating, blade coating, doctor roll coating, and screen printing can be used. The recording layer may be a single layer or a multilayer. The recording layer generally has a thickness of from 20 to 500 nm, preferably from 50 to 300 nm.

A light reflecting layer may be provided on the recording layer for the purpose of improving the reflectance at the time of replaying information. Substances having high reflectance are used as the light reflecting substance of the light reflecting layer, and as examples of such substances, the following metals and metalloids, e.g., Mg, Se, Y, Ti, Zr, Hf, V, Nb, Ta, Cr, Mo, W, Mn, Re, Fe, Co, Ni, Ru, Rh, Pd, Ir, Pt, Cu, Ag, Au, Zn, Cd, Al, Ga, In, Si, Ge, Te, Pb, Po, Sn and Bi, and stainless steel can be exemplified. Of these, Cr, Ni, Pt, Cu, Ag, Au, Al, and stainless steel are preferred. These substances may be used alone or in combination of two or more, or may be used as an alloy. The light reflecting layer can be formed by vapor depositing, sputtering or ion plating these light reflecting substances on the recording layer. The light reflecting layer generally has a thickness of from 10 to 300 nm, preferably from 50 to 200 nm.

A protective layer may be provided on the light reflecting layer for physically and chemically protecting the recording layer and the like. In the production of the DVD-R type optical information-recording medium, the provision of the protective layer is not always necessary. As examples of the materials for the protective layer, inorganic substances such as SiO, SiO₂, MgF₂, SnO₂, Si₃N₄, etc., and organic substances such as thermoplastic resins, thermosetting resins, UV curing resins can be exemplified. The protective layer can be formed, for example, by laminating a film obtained by extruding of plastics with an adhesive on the light reflecting layer, or may be formed by the method such as vapor depositing, sputtering or coating. When a thermoplastic resin or a thermosetting resin is used, these resins are dissolved in an appropriate solvent to prepare a coating solution, the obtained coating solution is coated and dried, thereby a protective layer can be formed. When a UV curing resin is used, the protective layer can also be formed by coating the resin as it is on the light reflecting layer, or dissolving the resin in an appropriate solvent to prepare a coating solution and coating the prepared coating solution, irradiating with UV rays to cure the resin. These coating solutions may further contain various additives such as an antistatic agent, an antioxidant, or a UV absorber according to purposes. The protective layer generally has a thickness of from 0.1 to 100 µm. Through the above processes, the laminate having provided thereon the recording layer, the light reflecting layer and the protective layer can be produced.

The CD-R type optical information-recording medium can be produced by the above processes. The DVD-R type optical information-recording medium can be produced by adhering two laminates prepared as above using an adhesive with each recording layer inside, or can be produced by adhering the laminate and a disc-like protective substrate having the same shape and comprising the same material as the above substrate of the laminate with an adhesive with the recording layer inside.

Optical information-recording according to the present invention can be performed using the above optical information-recording medium as follows. In the first place, the optical information-recording medium is irradiated with the light for recording such as semiconductor lasers from the substrate side with rotating the optical information-recording medium at a constant line velocity (1.2 to 14 m/sec in the case of CD format) or at a constant angular velocity. It is thought that information is recorded by the reflectance variation caused by the formation of a cavity at the interface between the recording layer and the light reflecting layer (the cavity is formed accompanied by the deformation of the recording layer or the light reflecting layer, or the deformation of both layers), or the deformation of the substrate such as building up, or the discoloration or changes in the association state of the recording layer due to the light irradiation. As the recording light, in general, semiconductor lasers having oscillating wavelengths of from 500 to 850 nm are used. In the present invention, semiconductor lasers having oscillating wavelengths of from 770 to 790 nm are used as suitable for the CD-R type optical information-recording medium and those having oscillating wavelengths of from 630 to 680 nm are used as suitable for the DVD-R type optical information-recording medium. Preferred lasers are red lasers having oscillating wavelengths of from 635 to 655 nm. The replay of the thus-recorded information can be performed by irradiating the optical information-recording medium with semiconductor lasers from the substrate side with rotating the optical information-recording medium at the same constant line velocity as the above, and detecting the reflected light.

The present invention will be described in greater detail with reference to the following Examples, but the invention should not be construed as being limited thereto.

### EXAMPLE 1

A coating solution for forming a recording layer was prepared by dissolving a naphthol compound and a cyanine dye compound according to the present invention and 10 wt% discoloration inhibitor of the cyanine dye in a 2,2,3,3-tetrafluoropropanol. The coating solution thus-obtained was coated by spin coating on the surface of the side of a polycarbonate substrate (diameter: 120 mm, thickness: 1.2 mm) on which a spiral pre-groove (track pitch: 1.6 µm, width of groove: 0.4 µm, depth of groove: 0.17 µm) had been formed by injection molding on the surface of the substrate, to thereby a recording layer (thickness (in the pre-groove): about 200 nm) was formed.

Subsequently, a light reflecting layer having a thickness of about 100 nm was formed on the recording layer by sputtering silver. Further, a UV curing resin (UV Curing Agent 3070, manufactured by Three Bond Co., Ltd.) was coated on the light reflecting layer and the coated layer was irradiated with UV rays, thereby a protective layer having a thickness of 3 µm was formed. According to the above procedure, the CD-R type optical information-recording media according to the present invention, Sample Nos. CD-R1 to CD-R9 were obtained. Optical information-recording media, Comparative Sample Nos. A to D were prepared in the same manner as above except that cyanine dye compounds for comparison were used in place of the naphthol compounds and the cyanine dye compounds according to the present invention. The compounds used in the preparation of the above optical information-recording media are summarized in Table 3 below.

**TABLE 3**

| Recording Medium No. | Naphthol Compound | Discoloration Inhibitor | Cyanine Dye Compound |
|---|---|---|---|
| CD-R1 | B-5* | A1-2 | 1 |
| CD-R2 | B-1* | A1-2 | 2 |
| CD-R3 | B-2* | A1-1 | 3 |
| CD-R4 | B-3* | A1-3 | 4 |
| CD-R5 | B-21* | A1-4 | 5 |
| CD-R6 | B-5* | A1-13 | 14 |
| CD-R7 | B-5* | A1-14 | 24 |
| CD-R8 | B-1** | A1-2 | 21 |
| CD-R9 | B-1** | None | 21 |
| Comparative Sample A | None | A1-2 | 21 |
| Comparative Sample B | None | A1-1 | 22 |
| Comparative Sample C | None | None | 21 |
| Comparative Sample D | C-1* | None | C-2 |

| | | | |
|---|---|---|---|
| *: Contained as the counter anion of the cyanine dye compound. **: Added as tetrabutylammonium salt. | | | |

The structural formulae of Compounds C-1 and C-2 used for comparison and shown in Table 3 are shown below.

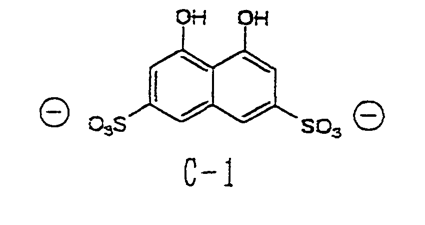

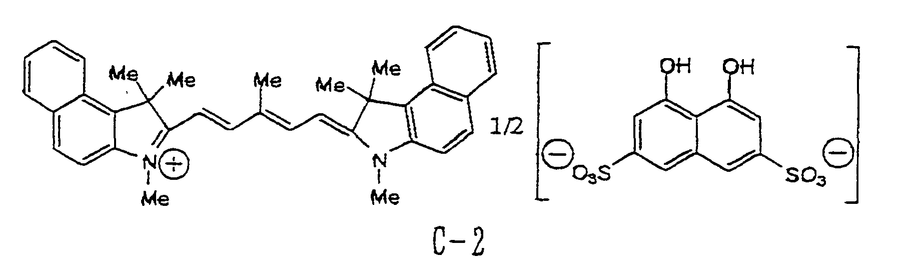

### Evaluation of Optical Information-Recording Medium

After 3T-EFM signals were recorded on each of the prepared optical information-recording media at 4-time velocity with a laser of a wavelength of 780 nm, the recording medium was irradiated with a xenon lamp (140,000 lux) at 80°C and 85% RH for 48 hours. Recording characteristics the recording medium before and after recording were measured with OMT 2000 (a product of Pulstec). The results of evaluation obtained are shown in Table 4 below.

**TABLE 4**

| Recording Medium No. | Reflectance at Unrecorded Part (%) | Degree of Modulation (recording power: 7 mW) | Jitter/ns | | Block Error | |
|---|---|---|---|---|---|---|
| | | | Before Irradiation | After Irradiation | Before Irradiation | After Irradiation |
| CD-R1 | 75 | 55 | 6.1 | 7.0 | 0 | 0 |
| CD-R2 | 74 | 53 | 6.3 | 7.1 | 0 | 0 |
| CD-R3 | 74 | 54 | 6.2 | 7.2 | 0 | 0 |
| CD-R4 | 72 | 51 | 6.3 | 7.1 | 0 | 0 |
| CD-R5 | 72 | 50 | 6.1 | 7.5 | 0 | 0 |
| CD-R6 | 70 | 49 | 6.6 | 7.7 | 0 | 5 |
| CD-R7 | 72 | 48 | 6.7 | 8.0 | 0 | 10 |
| CD-R8 | 73 | 50 | 6.8 | 7.9 | 0 | 15 |
| CD-R9 | 73 | 51 | 6.7 | 10.7 | 0 | 20 |
| Comparative Sample A | 70 | 48 | 7.5 | 11.2 | 0 | 22 |
| Comparative Sample B | 68 | 45 | 7.8 | 12.3 | 0 | 30 |
| Comparative Sample C | 65 | 42 | 8.0 | 25.1 | 0 | 52 |
| Comparative Sample D | 69 | 47 | 7.4 | 11.6 | 0 | 25 |

It can be understood from the results in Table 4 that CD-R type optical information-recording media having the recording layers containing the naphthol compounds according to the present invention (Sample Nos. CD-R1 to CD-R9) exhibit high reflectance and high degree of modulation as compared with CD-R type optical information-recording media having conventional recording layers not containing the naphthol compounds according to the present invention (Sample Nos. A to D), as a result, high signal intensity can be obtained at high sensitivity by the samples according to the present invention. Further, CD-R samples according to the present invention show low jitter values and low block error values before and after light irradiation, which proves that the samples of the present invention have high fastness capable of retaining the characteristic of causing read error with difficulty even under forced conditions.

### EXAMPLE 2

A coating solution for forming a recording layer was prepared by dissolving a naphthol compound and a cyanine dye compound according to the present invention and 10 wt% discoloration inhibitor of the cyanine dye in a 2,2,3,3-tetrafluoropropanol. The coating solution thus-obtained was coated by spin coating on the surface of the side of a polycarbonate substrate (diameter: 120 mm, thickness: 0.6 mm) on which a spiral pre-groove (track pitch: 0.8 µm, width of groove: 0.4 µm, depth of groove: 0.15 µm) had been formed by injection molding on the surface of the substrate, to thereby a recording layer (thickness (in the pre-groove): about 200 nm) was formed.

A light reflecting layer having a thickness of about 100 nm was formed on the recording layer by vapor depositing silver, thus a laminate comprising a substrate having provided thereon a recording layer and a light reflecting layer in this order was prepared. Another transparent polycarbonate substrate (a disc-like protective substrate, diameter: 120 mm, thickness: 0.6 mm) was prepared. The above-obtained laminate and this disc-like protective substrate were adhered (thickness: 1.2 mm) with an adhesive (manufactured by Three Bond Co., Ltd.) with the recording layer inside. According to the above procedure, the DVD-R type optical information-recording media according to the present invention, Sample Nos. DVD-R1 to DVD-R8 were obtained. Optical information-recording media, Comparative Sample Nos. E, F and G were prepared in the same manner as above except that cyanine dye compounds for comparison were used in place of the naphthol compounds and the cyanine dye compounds according to the present invention. The compounds used in the preparation of the above optical information-recording media are summarized in Table 5 below.

**TABLE 5**

| Recording Medium No. | Naphthol Compound | Discoloration Inhibitor | Cyanine Dye Compound |
|---|---|---|---|
| DVD-R1 | B-5* | Al-1 | 16 |
| DVD-R2 | B-5* | A1-2 | 16 |
| DVD-R3 | B-1* | Al-1 | 17 |
| DVD-R4 | B-2* | Al-2 | 18 |
| DVD-R5 | B-7* | Al-13 | 19 |
| DVD-R6 | B-22* | Al-14 | 20 |
| DVD-R7 | B-5** | Al-15 | 25 |
| DVD-R8 | B-5** | None | 25 |
| Comparative Sample E | None | Al-1 | 25 |
| Comparative Sample F | None | A1-2 | 25 |
| Comparative Sample G | None | None | 25 |

| | | | |
|---|---|---|---|
| *: Contained as the counter anion of the cyanine dye compound. **: Added as tetrabutylammonium salt. | | | |

### Evaluation of Optical Information-Recording Medium

Beams of a semiconductor laser of a wavelength of 635 nm were converged on each of the above-prepared optical information-recording media with an NA 0.6 lens and signals were recorded at linear velocity of 3.68 m/s and modulation frequency of 4 MHz. The recording medium was then irradiated with a xenon lamp (140,000 lux) at 80°C and 85% RH for 48 hours. Recording characteristics of the recording medium before and after recording were measured. -The results of evaluation obtained are shown in Table 6 below.

**TABLE 6**

| Recording Medium No. | Reflectance at Unrecorded Part (%) | Degree of Modulation (recording power: 7 mW) | Jitter/ns | | Block Error | |
|---|---|---|---|---|---|---|
| | | | Before Irradiation | After Irradiation | Before Irradiation | After Irradiation |
| DVD-R1 | 70 | 0.68 | 8.2 | 9.1 | 0 | 0 |
| DVD-R2 | 69 | 0.65 | 8.3 | 9.2 | 0 | 0 |
| DVD-R3 | 68 | 0.65 | 8.3 | 9.1 | 0 | 0 |
| DVD-R4 | 68 | 0.63 | 8.5 | 9.3 | 0 | 0 |
| DVD-R5 | 65 | 0.62 | 8.3 | 9.4 | 0 | 0 |
| DVD-R6 | 66 | 0.63 | 8.5 | 9.5 | 0 | 0 |
| DVD-R7 | 65 | 0.61 | 8.8 | 9.9 | 0 | 8 |
| DVD-R8 | 66 | 0.62 | 9.0 | 15.1 | 0 | 16 |
| Comparative Sample E | 65 | 0.58 | 9.8 | 11.0 | 0 | 30 |
| Comparative Sample F | 64 | 0.55 | 9.5 | 10.8 | 0 | 31 |
| Comparative Sample G | 64 | 0.56 | 10.2 | 24.8 | 0 | 55 |

It can be understood from the results in Table 4 that DVD-R type optical information-recording media having the recording layers containing the naphthol compounds according to the present invention (Sample Nos. DVD-R1 to DVD-R8) exhibit high reflectance and high degree of modulation as compared with DVD-R type optical information-recording media having conventional recording layers not containing the naphthol compounds according to the present invention (Sample Nos. A to D), as a result, high signal intensity can be obtained at high sensitivity by the samples according to the present invention. Further, DVD-R samples according to the present invention show low jitter values and low block error values before and after light irradiation, which proves that the samples of the present invention have high fastness capable of retaining the characteristic of causing read error with difficulty even under forced conditions.

An optical information-recording medium having-high reflectance, high sensitivity, high modulation degree and high fastness can be obtained by utilizing the naphthol compound according to the present invention. In addition, when the specific cyanine dye compound and the specific discoloration inhibitor according to the present invention are used, the above characteristics become still further conspicuous, therefore, they can be advantageously used in CD-R and DVD-R optical information-recording media.

## Claims

1. An optical information-recording medium which comprises a substrate having provided thereon a recording layer capable of recording information by laser beam irradiation, wherein said recording layer contains a naphthol compound represented by formula (I) and a cyanine dye compound: 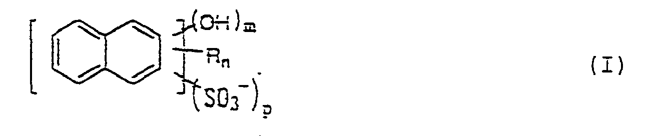 wherein R represents a monovalent substituent other than a hydroxyl group and a SO₃⁻ group; m represents an integer of from 1 to 4; n represents an integer of from 0 to 7; and p represents an integer of from 0 to 7, provided that m + n + p is 8 or less, when n represents an integer of 2 or more, a plurality of R groups may be the same or different, and when m = p = 2, two hydroxyl groups are not substituted at the 1-and 5-positions or at the 1- and 8-positions at the same time.

2. The optical information-recording medium according to claim 1, wherein said naphthol compound of formula (I) has neither a hydroxyl group nor a SO₃⁻ group at the 8-position.

3. The optical information-recording medium according to claim 1 or 2, wherein m in formula (I) is 1 or 2, and said naphthol compound has a hydroxyl group at least one position selected from 1-, 2- and 7-positions.

4. The optical infromation-recording medium according to any one of claims 1 to 3, wherein p in formula (I) is 2 and said naphthol compound has a SO₃⁻ group at the 3- and 6-positions.

5. The optical information-recording medium according to any one of claims 1 to 4, wherein said cyanine dye compound is represented by the following formula (II): 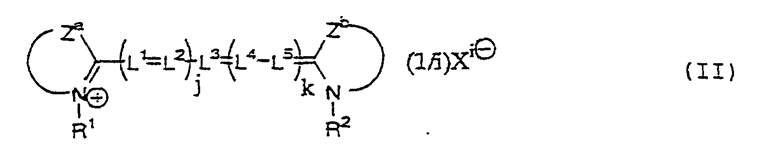 wherein Z^{a} and Z^{b} each represents an atomic group necessary to form a 5- or 6-membered nitrogen-containing heterocyclic ring; R¹ and R² each represents a substituted or unsubstituted alkyl group or a substituted or unsubstituted aryl group; L¹, L², L³, L⁴ and L⁵ each represents a substituted or unsubstituted methine group, and the substituents on L¹ to L⁵ may be bonded to each other to form a ring; j represents 0, 1 or 2; k represents 0 or 1; Xⁱ⁻ represents an i-valent anion; and i represents an integer of 1 or more.

6. The optical information-recording medium according to any one of claims 1 to 5, wherein said cyanine dye compound is represented by the following formula (III) : 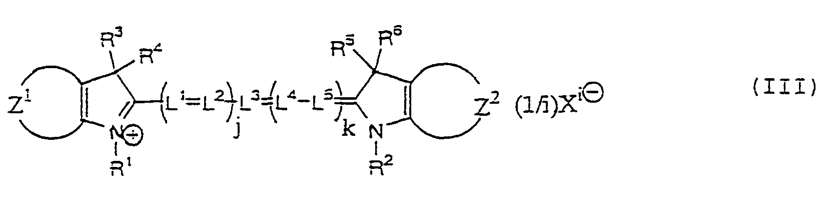 wherein Z¹ and Z² each represents an atomic group necessary to form an indolenine nucleus or a benzoindolenine nucleus; R¹ and R² each represents a substituted or unsubstituted alkyl group or a substituted or unsubstituted aryl group; R³, R⁴, R⁵ and R⁶ each represents a substituted or unsubstituted alkyl group; L¹, L², L³, L⁴ and L⁵ each represents a substituted or unsubstituted methine group, and the substituents on L¹ to L⁵ may be bonded to each other to form a ring; j represents 0, 1 or 2; k represents 0 or 1; Xⁱ⁻ represents an i-valent anion; and i represents an integer of 1 or more.

7. The optical information-recording medium according to any one of claims 1 to 6, wherein the cyanine dye compound is represented by the following formula (IV): 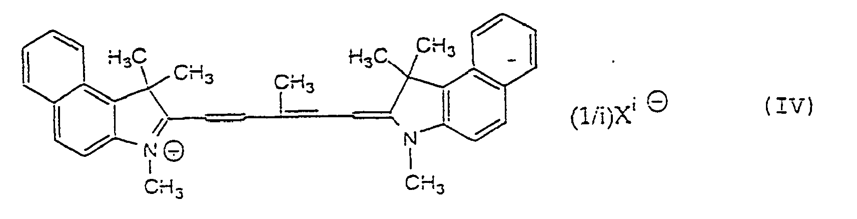 wherein Xⁱ⁻ represents an i-valent anion and i represents an integer of 1 or more.

8. The optical information-recording medium according to any one of claims 5 to 7, wherein p in formula (I) is 1 to 3 and Xⁱ⁻ in formula (II), (III) or (IV) is the naphthol compound of formula (I).

9. The optical information-recording medium according to any one of claims 1 to 8, wherein said recording layer contains a compound represented by the following formula (A1) or (A2): 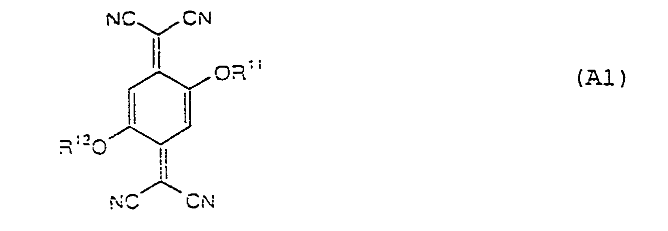 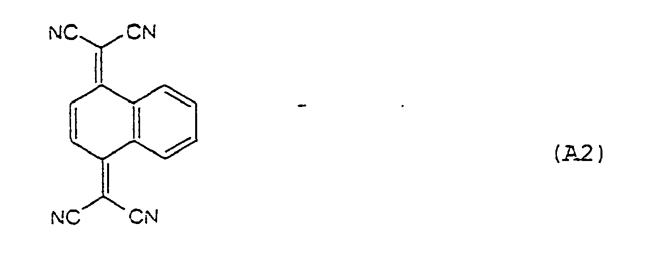 wherein R¹¹ and R¹² each represents a substituted or unsubstituted hydrocarbon group.

10. The optical information-recording medium according to any one of claims 1 to 9, further comprising a light-reflecting layer which comprises a metal and which is provided on said recording layer.

11. The optical information-recording medium according to any one of claims 1 to 10,
wherein said substrate is a transparent disc having a thickness of 1.2 + 0.2 mm and having formed thereon a pre-groove at a track pitch of from 1.4 to 1.8 µm, and
wherein said recording layer is provided on the pre-groove-formed surface of the substrate.

12. The optical information-recording medium according to any one of claims 1 to 10,
wherein said substrate is a transparent disc having a thickness of 0.6 ± 0.1 mm and having formed thereon a pre-groove at a track pitch of from 0.6 to 0.9 µm, and
wherein said recording layer is provided on the pre-groove-formed surface of the substrate.

13. The optical information-recording medium according to claim 12, which comprises two sets of said substrate each having thereon the recording layer and which has a thickness of from 1.2 ± 0.2 mm,
wherein said substrates both have a diameter of 120 ± 0.3 mm, and
wherein said two sets of the substrates are laminated so that the substrates both become outer layers.

14. The optical information-recording medium according to claim 12, further comprising a protective substrate which is a transparent disc having the same shape as said substrate,
wherein said substrate has a diameter of 120 ± 0.3 mm,
wherein said protective substrate is provided on the recording layer side, and
wherein the optical information-recording medium has a thickness of from 1.2 ± 0.2 mm.

15. A method for recording information, comprising irradiating an optical information-recording medium with a laser beam having a wavelength of 750 nm to 800 nm, wherein said optical information-recording medium is one according to any one of claims 1 to 11.

16. A method for recording information, comprising irradiating an optical information-recording medium with a laser beam having a wavelength of 630 nm to 680 nm, wherein said optical information-recording medium is one according to any one of claims 1 to 10 and 12 to 14.

## Patentansprüche

1. Optisches Informationsaufzeichnungsmedium, welches ein Substrat umfasst, auf dem eine Aufzeichnungsschicht bereitgestellt ist, die durch Bestrahlung mit einem Laserstrahl Informationen aufzeichnen kann, wobei die Aufzeichnungsschicht eine Naphtholverbindung, die durch Formel (I) wiedergegeben wird, und eine Cyaninfarbstoffverbindung enthält: 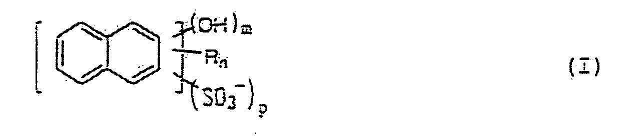 wobei R einen einwertigen Substituenten bedeutet, bei dem es sich nicht um eine Hydroxylgruppe und eine SO₃⁻-Gruppe handelt; m eine ganze Zahl von 1 bis 4 bedeutet; n eine ganze Zahl von 0 bis 7 bedeutet; und p eine ganze Zahl von 0 bis 7 bedeutet, mit der Maßgabe, dass m + n + p 8 oder weniger ist, wenn n eine ganze Zahl von 2 oder mehr bedeutet, eine Mehrzahl von R-Gruppen gleich oder verschieden sein können, und wenn m = p = 2, zwei Hydroxylgruppen nicht gleichzeitig in den 1- und 5-Stellungen oder in den 1- und 8-Stellungen substituiert sind.

2. Optisches Informationsaufzeichnungsmedium nach Anspruch 1, wobei die Naphtholverbindung von Formel (I) weder eine Hydroxylgruppe noch eine SO₃⁻-Gruppe in der 8-Stellung aufweist.

3. Optisches Informationsaufzeichnungsmedium nach Anspruch 1 oder 2, wobei m in Formel (I) 1 oder 2 ist und die Naphtholverbindung eine Hydroxylgruppe in wenigstens einer Stellung, ausgewählt aus den 1-, 2- und 7-Stellungen, aufweist.

4. Optisches Informationsaufzeichnungsmedium nach einem der Ansprüche 1 bis 3, wobei p in Formel (I) 2 ist und die Naphtholverbindung eine SO₃⁻-Gruppe in den 3- und 6-Stellungen aufweist.

5. Optisches Informationsaufzeichnungsmedium nach einem der Ansprüche 1 bis 4, wobei die Cyaninfarbstoffverbindung durch die folgende Formel (II) wiedergegeben wird: 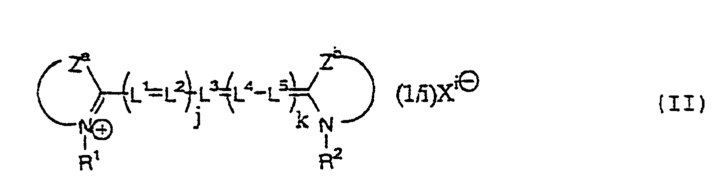 wobei Z^{a} und Z^{b} jeweils eine Atomgruppe bedeutet, die zum Bilden eines 5- oder 6-gliedrigen stickstoffhaltigen heterocyclischen Rings erforderlich ist; R¹ und R² jeweils eine substituierte oder unsubstituierte Alkylgruppe oder eine substituierte oder unsubstituierte Arylgruppe bedeutet; L¹, L², L³, L⁴ und L⁵ jeweils eine substituierte oder unsubstituierte Methingruppe bedeutet und die Substituenten an L¹ bis L³ unter Bildung eines Rings aneinander gebunden sein können; j 0, 1 oder 2 bedeutet; k 0 oder 1 bedeutet; Xⁱ⁻ ein i-wertiges Anion bedeutet; und i eine ganze Zahl von 1 oder mehr bedeutet.

6. Optisches Informationsaufzeichnungsmedium nach einem der Ansprüche 1 bis 5, wobei die Cyaninfarbstoffverbindung durch die folgende Formel (III) wiedergegeben wird: 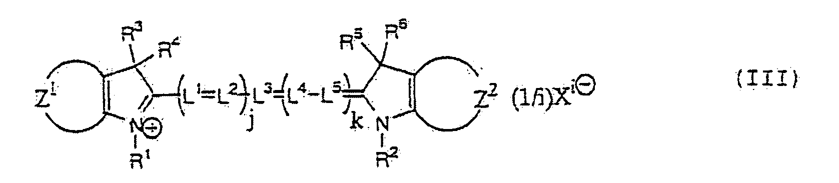 wobei Z¹ und Z² jeweils eine Atomgruppe bedeutet, die zum Bilden eines Indoleninkerns oder eines Benzoindoleninkerns erforderlich ist; R¹ und R² jeweils eine substituierte oder unsubstituierte Alkylgruppe oder eine substituierte oder unsubstituierte Arylgruppe bedeutet; R³, R⁴, R⁵ und R⁶ jeweils eine substituierte oder unsubstituierte Alkylgruppe bedeutet; L¹, L 2, L³, L⁴ und L⁵ jeweils eine substituierte oder unsubstituierte Methingruppe bedeutet und die Substituenten an L¹ bis L⁵ unter Bildung eines Rings aneinander gebunden sein können; j 0, 1 oder 2 bedeutet; k 0 oder 1 bedeutet; Xⁱ⁻ ein i-wertiges Anion bedeutet; und i eine ganze Zahl von 1 oder mehr bedeutet.

7. Optisches Informationsaufzeichnungsmedium nach einem der Ansprüche 1 bis 6, wobei die Cyaninfarbstoffverbindung durch die folgende Formel (IV) wiedergegeben ist: 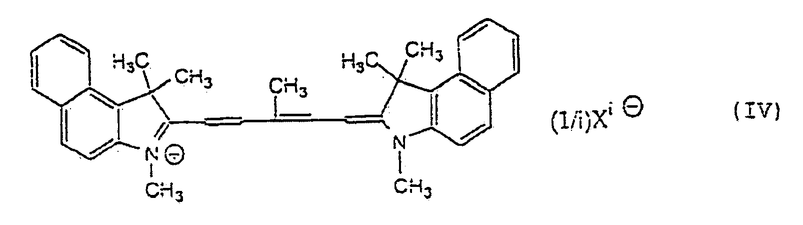 wobei Xⁱ⁻ ein i-wertiges Anion bedeutet und i eine ganze Zahl von 1 oder mehr bedeutet.

8. Optisches Informationsaufzeichnungsmedium nach einem der Ansprüche 5 bis 7, wobei p in Formel (I) 1 bis 3 ist und Xⁱ⁻ in Formel (II), (III) oder (IV) die Naphtholverbindung von Formel (I) ist.

9. Optisches Informationsaufzeichnungsmedium nach einem der Ansprüche 1 bis 8, wobei die Aufzeichnungsschicht eine Verbindung enthält, die durch die folgende Formel (A1) oder (A2) wiedergegeben wird: 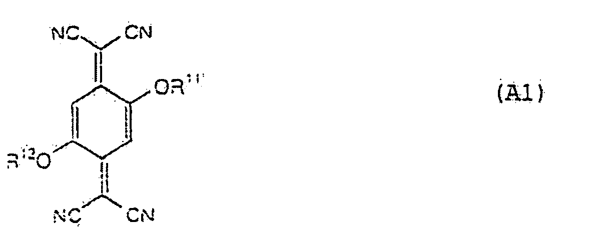 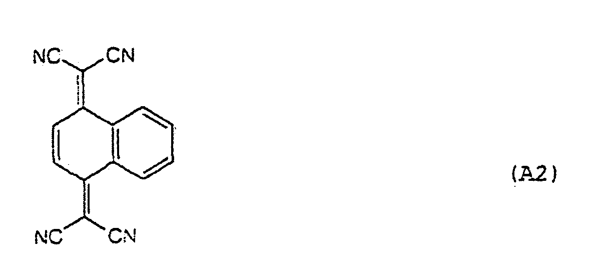 wobei R¹¹ und R¹² jeweils eine substituierte oder unsubstituierte Kohlenwasserstoffgruppe bedeutet.

10. Optisches Informationsaufzeichnungsmedium nach einem der Ansprüche 1 bis 9, das außerdem eine lichtreflektierende Schicht umfasst, welche ein Metall umfasst und welche auf der Aufzeichnungsschicht bereitgestellt ist.

11. Optisches Informationsaufzeichnungsmedium nach einem der Ansprüche 1 bis 10,
wobei das Substrat eine transparente Scheibe mit einer Dicke von 1,2 ± 0,2 mm ist, auf der ein Pregroove mit einem Spurabstand von 1,4 bis 1,8 µm gebildet ist, und
wobei die Aufzeichnungsschicht auf der Oberfläche des Substrats mit dem darauf gebildeten Pregroove bereitgestellt ist.

12. Optisches Informationsaufzeichnungsmedium nach einem der Ansprüche 1 bis 10,
wobei das Substrat eine transparente Scheibe mit einer Dicke von 0,6 ± 0,1 mm ist, auf der ein Pregroove mit einem Spurabstand von 0,6 bis 0,9 µm gebildet ist, und
wobei die Aufzeichnungsschicht auf der Oberfläche des Substrats mit dem darauf gebildeten Pregroove bereitgestellt ist.

13. Optisches Informationsaufzeichnungsmedium nach Anspruch 12, welches zwei Sätze des Substrats umfasst, die jeweils darauf die Aufzeichnungsschicht aufweisen, und welches eine Dicke von 1,2 ± 0,2 mm aufweist,
wobei die Substrate beide einen Durchmesser von 120 + 0,3 mm aufweisen, und
wobei die zwei Sätze der Substrate laminiert sind, so dass die Substrate beide äußere Schichten werden.

14. Optisches Informationsaufzeichnungsmedium nach Anspruch 12, außerdem umfassend ein Schutzsubstrat, welches eine transparente Scheibe mit der gleichen Form wie das Substrat ist,
wobei das Substrat einen Durchmesser von 120 ± 0,3 mm aufweist,
wobei das Schutzsubstrat auf der Seite der Aufzeichnungsschicht bereitgestellt ist, und
wobei das optische Informationsaufzeichnungsmedium eine Dicke von 1,2 ± 0,2 mm aufweist.

15. Verfahren zum Aufzeichnen von Information, umfassend das Bestrahlen eines optischen Informationsaufzeichnungsmediums mit einem Laserstrahl mit einer Wellenlänge von 750 nm bis 800 nm, wobei das optische Informationsaufzeichnungsmedium eines nach einem der Ansprüche 1 bis 11 ist.

16. Verfahren zum Aufzeichnen von Information, umfassend das Bestrahlen eines optischen Informationsaufzeichnungsmediums mit einem Laserstrahl mit einer Wellenlänge von 630 nm bis 680 nm, wobei das optische Informationsaufzeichnungsmedium eines nach einem der Ansprüche 1 bis 10 und 12 bis 14 ist.

## Revendications

1. Support d'enregistrement d'informations optique qui comprend un substrat sur lequel est disposée une couche d'enregistrement capable d'enregistrer des informations par irradiation au faisceau laser, où ladite couche d'enregistrement contient un composé naphtol représenté par la formule (I) et un composé de teinte de cyanine : 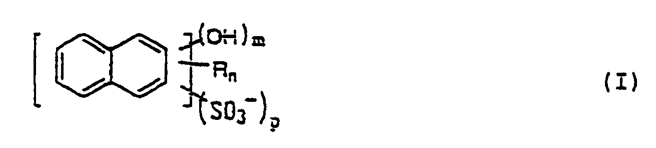 dans laquelle R représente un substituant monovalent autre qu'un groupe hydroxyle et un groupe SO₃⁻; m représente un entier de 1 à 4 ; n représente un entier de 0 à 7 ; et p représente un entier de 0 à 7, à condition que m + n + p vaille 8 ou moins, lorsque n représente un entier de 2 ou plus, une pluralité de groupes R peut être identique ou différente, et lorsque m = p = 2, deux groupes hydroxyle ne sont pas substitués simultanément aux positions 1 et 5 ou aux positions 1 et 8.

2. Support d'enregistrement d'informations optique selon la revendication 1, dans lequel ledit composé naphtol de formule (I) ne comporte pas de groupe hydroxyle ni de groupe SO₃⁻ à la position 8.

3. Support d'enregistrement d'informations optique selon la revendication 1 ou 2, dans lequel m dans la formule (I) vaut 1 ou 2, et ledit composé naphtol comporte un groupe hydroxyle à au moins une position choisie parmi les positions 1, 2 et 7.

4. Support d'enregistrement d'informations optique selon l'une quelconque des revendications 1 à 3, dans lequel p dans la formule (I) vaut 2 et ledit composé naphtol comporte un groupe SO₃⁻ aux positions 3 et 6.

5. Support d'enregistrement d'informations optique selon l'une quelconque des revendications 1 à 4, dans lequel ledit composé de teinte de cyanine est représenté par la formule (II) suivante : 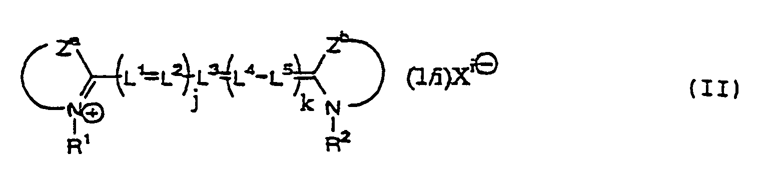 dans laquelle Z^{a} et Z^{b} représentent chacun un groupe atomique nécessaire pour former un cycle hétérocyclique contenant un atome d'azote à 5 ou 6 chaînons ; R¹ et R² représentent chacun un groupe alkyle substitué ou non substitué ou un groupe aryle substitué ou non substitué ; L¹, L², L³, L⁴ et L⁵ représentent chacun un groupe méthine substitué ou non substitué, et les substituants sur L¹ à L⁵ peuvent être liés les uns aux autres pour former un cycle ; j représente 0, 1 ou 2 ; k représente 0 ou 1 ; Xⁱ⁻ représente un anion i-valent ; et i représente un entier de 1 ou plus.

6. Support d'enregistrement d'informations optique selon l'une quelconque des revendications 1 à 5, dans lequel ledit composé de teinte de cyanine est représenté par la formule (III) suivante : 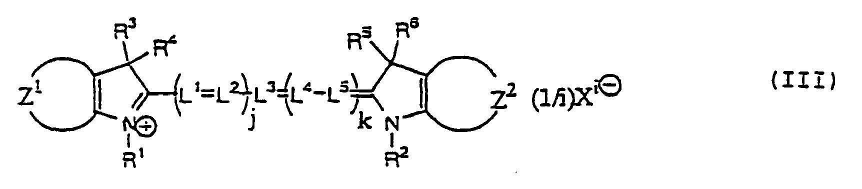 dans laquelle Z¹ et Z² représentent chacun un groupe atomique nécessaire pour former un noyau indolénine ou un noyau benzoindolénine ; R¹ et R² représentent chacun un groupe alkyle substitué ou non substitué ou un groupe aryle substitué ou non substitué ; R³, R⁴, R⁵ et R⁶ représentent chacun un groupe alkyle substitué ou non substitué ; L¹, L², L³, L⁴ et L⁵ représentent chacun un groupe méthine substitué ou non substitué, et les substituants sur L¹ à L⁵ peuvent être liés les uns aux autres pour former un cycle ; j représente 0, 1 ou 2 ; k représente 0 ou 1 ; Xⁱ⁻ représente un anion i-valent ; et i représente un entier de 1 ou plus.

7. Support d'enregistrement d'informations optique selon l'une quelconque des revendications 1 à 6, dans lequel le composé de teinte de cyanine est représenté par la formule (IV) suivante : 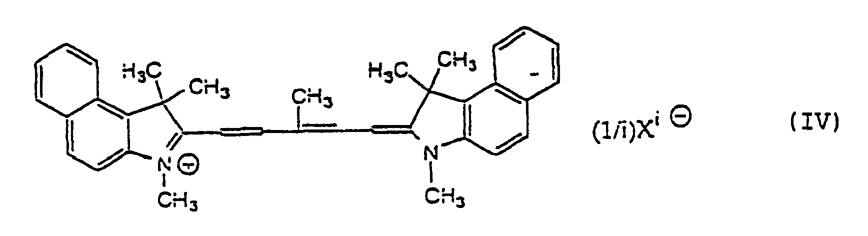 dans laquelle Xⁱ⁻ représente un anion i-valent et i représente un entier de 1 ou plus.

8. Support d'enregistrement d'informations optique selon l'une quelconque des revendications 5 à 7, dans lequel p dans la formule (I) vaut 1 à 3 et Xⁱ⁻ dans la formule (II), (III) ou (IV) est le composé naphtol de formule (I).

9. Support d'enregistrement d'informations optique selon l'une quelconque des revendications 1 à 8, dans lequel ladite couche d'enregistrement contient un composé représenté par la formule (A1) ou (A2) : suivante : 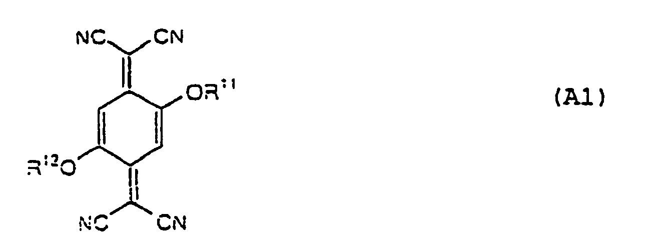 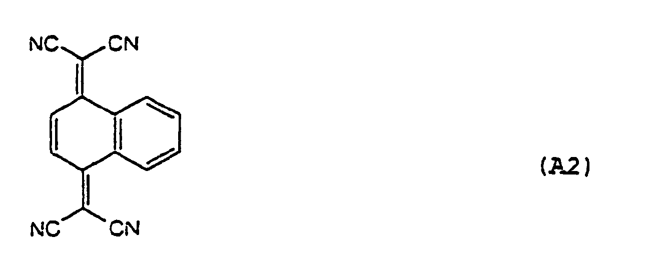 dans lesquelles R¹¹ et R¹² représentent chacun un groupe hydroxyle substitué ou non substitué.

10. Support d'enregistrement d'informations optique selon l'une quelconque des revendications 1 à 9, comprenant en outre une couche réfléchissante qui comprend un métal est qui est disposée sur ladite couche d'enregistrement.

11. Support d'enregistrement d'informations optique selon l'une quelconque des revendications 1 à 10,
dans lequel ledit substrat est un disque transparent ayant une épaisseur de 1,2 ± 0,2 mm et sur lequel est formée une pré-rainure à un pas de vis de 1,4 à 1,8 µm, et
dans lequel ladite couche d'enregistrement est disposée sur la surface formée d'une pré-rainure du substrat.

12. Support d'enregistrement d'informations optique selon l'une quelconque des revendications 1 à 10,
dans lequel ledit substrat est un disque transparent ayant une épaisseur de 0,6 ± 0,1 mm et sur lequel est formée une pré-rainure à un pas de vis de 0,6 à 0,9 µm, et
dans lequel ladite couche d'enregistrement est disposée sur la surface formée d'une pré-rainure du substrat.

13. Support d'enregistrement d'informations optique selon la revendication 12, qui comprend deux ensembles dudit substrat sur chacun desquels est formée la couche d'enregistrement et qui a une épaisseur de 1,2 ± 0,2 mm,
dans lequel lesdits substrats ont tous deux un diamètre de 120 ± 0,3 mm, et
dans lequel lesdits deux ensembles des substrats sont stratifiés de sorte que les substrats deviennent tous deux des couches externes.

14. Support d'enregistrement d'informations optique selon la revendication 12, comprenant en outre un substrat protecteur qui est un disque transparent ayant la même forme que ledit substrat,
dans lequel ledit substrat a un diamètre de 120 ± 0,3 mm,
dans lequel ledit substrat protecteur est disposé sur le côté de couche d'enregistrement, et
dans lequel le support d'enregistrement d'informations optique a une épaisseur de 1,2 ± 0,2 mm.

15. Procédé d'enregistrement d'informations, comprenant l'irradiation d'un support d'enregistrement d'informations optique avec un faisceau laser ayant une longueur d'onde de 750 nm à 800 nm, dans lequel ledit support d'enregistrement d'informations optique est celui selon l'une quelconque des revendications 1 à 11.

16. Procédé d'enregistrement d'informations, comprenant l'irradiation d'un support d'enregistrement d'informations optique avec un faisceau laser ayant une longueur d'onde de 630 nm à 680 nm, dans lequel ledit support d'enregistrement d'informations optique est celui selon l'une quelconque des revendications 1 à 10 et 12 à 14.
